Europäisches Patentamt

European Patent Office

Office européen des brevets

(19)

(11) Publication number: 0 211 162
A2

# (12) EUROPEAN PATENT APPLICATION

(21) Application number: 86106716.3

(51) Int. Cl.⁴: G06F 15/40

(22) Date of filing: 16.05.86

The title of the invention has been amended (Guidelines for Examination in the EPO, A-III, 7.3).

(30) Priority: 11.06.85 US 743554

(43) Date of publication of application:
25.02.87 Bulletin 87/09

(84) Designated Contracting States:
DE FR GB IT

(71) Applicant: International Business Machines Corporation
Old Orchard Road
Armonk, N.Y. 10504(US)

(72) Inventor: Bartocci, Francis Dennis
2434 Northern Hill Ct.
Rochester Minnesota 55904(US)
Inventor: Won, Joha Hyun
24, Sedgewood Road
Chapel Hill North Carolina 27514(US)
Inventor: Singh, Harinder S.
10722 Kirkaldy Lane
Boca Raton Florida 33434(US)
Inventor: Gopal, Inder
60, Hauen Ave. NR 19E
New York N.Y. 10032(US)

(74) Representative: Bonin, Jean-Jacques
Compagnie IBM France Département de Propriété Intellectuelle
F-06610 La Gaude(FR)

(54) Distributed data base directory system with control blocks for sequential and parallel queries.

(57) A database directory system for processing user queries includes a plurality of directory service units (DSU) which provide one or more directory service functions, the system including a directory operation control block for controlling directory system functions for user queries, the directory operation control block containing an affinity list, a query algorithm control field, an integrity parameters field and an access control field and a query control block, the query control block containing information indicating the origin of a query received by a DSU.

| AFFINITY LIST | | |
|---|---|---|
| SEARCH ALGORITHM CONTROL | | |
| INTEGRITY PARMS | | |
| ACCESS CONTROL | | |

DIRECTORY OPERATION CONTROL BLOCK

FIG. 15

## GENERALIZED ALGORITHMIC CONTROL BLOCKS FOR SEQUENTIAL AND PARALLEL QUERIES IN DISTRIBUTED DIRECTORY NETWORKS

CROSS-REFERENCE TO RELATED APPLICATIONS

The following copending applications, all filed by the same applicant as the present application, are related to the subject matter of this application, in that they each relate to different aspects of a directory database system.

(A1) "GENERALIZED DATA DIRECTORY MODEL",

Application N° ........

(A2) "PROPAGATION APPARATUS FOR NETWORK QUERIES THROUGH SUPERIOR-SUBORDINATE AND PEER-PEER DATA DISTRIBUTION RELATIONSHIPS",

(A3) "DYNAMIC UPDATE OF DATABASE DIRECTORIES USING DIRECTED OR UNDIRECTED MECHANISMS", Application N° ........

(A4) "HYBRID DIRECTORY DATA DISTRIBUTION SCHEMES FOR NETWORK TOPOLOGIES", Application N° ........

All of the above applications (filed concurrently with the present application) are incorporated herein by reference.

BACKGROUND OF THE INVENTION

Field of the Invention

The present invention is directed to systems for implementing the sequential and parallel propagation of queries in a data base directory by means of two sets of tables. These tables can either be user-defined or automatically created based on user-defined algorithms. In the present application, the term "directory" means a table of names and corresponding items of data. Data in a directory is locational or directive in nature, e.g.

(1) a listing of names, addresses, and other data about a specific group of persons or organizations, or

(2) an index that is used by a control program to locate one or more blocks of data stored in separate areas of a data set in direct access storage, or

(3) an index to locate blocks of program information.

The user of a directory knows the definition of the object references by a name, but needs the specific data value(s), e.g. phone number, in order to perform a specific activity.

Description of the Prior Art

Distributed database management systems offer users the ability to distribute data and workload among multiple processing sites. Ideally, a distributed database management system should support growth while preserving local administrative autonomy and control of access to locally stored data. At the same time, the distributed database should provide its users with a single system image such that, although the data is distributed among several sites, the data distribution is transparent to the users who express their database accesses as though the data is at one place.

It is important to preserve the local autonomy of database administrators and users at each site of the distributed database while, at the same time, supporting information sharing among sites. It is to be expected that the equipment supporting the database at different sites will be controlled by different administrative entities. This expectation increases as the entry costs for computing facilities decline. Increased distribution of computing facilities leads to additional requirements for information sharing between sites to support the shared objectives and interests of the users at different sites. Therefore, credible access control mechanisms must be provided to insure isolation, when desired, and to control access to the shared information. At the same time, users must be able to easily access and manipulate remote data as though it were local.

The distributed database management system architecture should preserve local control and function when accessing local database objects. The fact that a site participates in the distributed database should not reduce that site's ability to perform local actions on local data by requiring the participation of other sites. Also, data access availability should be a function only of the availability of the site(s) storing that data objects. The failure of one site should not impact sites which do not reference database objects stored (or controlled) by the failed site.

Finally, it must not be difficult for an existing database site to join the distributed database. It should be fairly easy for an existing database site to establish the ability to access data at another site. The addition of another site to the distributed database must not require a nationwide (or global) system generation.

U.S. Patent 4,468,728 discloses data structure and a search method for a database management system in which the data structure is arranged in a plurality of search trees. The initial search tree and an initial subset of trees are maintained in a main fast access memory, while the remaining trees are kept in mass memory. An input search parameter is partitioned into a plurality of subparameters, one for each search tree. The subparameters are used to search a tree in each level of the data structure until the location of a terminating file is determined.

An article entitled "Object Naming and Catalog Management For a Distributed Database Manager", Lindsay, 1981 IEEE, page 31, describes a system in which distribution of the catalog representation and maintenance leads to an architecture which supports transparent user access to data which may be distributed, replicated, and partitioned among the site of the distributed system. The architecture preserves individual site autonomy while facilitating graceful system growth.

## SUMMARY OF THE INVENTION

The following terms are used herein with the indicated meaning:

Applications Interface (API) -The protocol boundary between the user and the directory service.

Directory Service Unit (DSU) -A unit of directory service provides one or more directory service functions.

Directory Service Interface (DSI) -The internal exchange interface between directory service units (DSU) and outside services between DSUs (local or remote).

Directory Service System (DSS) -An instance of directory service in a given network of distributed directory services.

In accordance with the present invention, there are two sets or types of controls blocks in a directory data-base system which are utilized for the processing of sequential and parallel user queries, a directory operation control block and a query control block.

## BRIEF DESCRIPTION OF THE DRAWINGS

Fig. 1 is a block diagram illustrating processes using a directory service system;

Fig. 2 is a block diagram illustrating interconnected DSUs in a DSS;

Fig. 3 illustrates the processing functions distributed in a DSS;

Fig. 4 illustrates a two-level hybrid directory system;

Fig. 5 shows the structure of the end user service P(U);

Fig. 6 is a block diagram illustrating the structure of the directory function service P(F);

Fig. 7 is a block diagram showing the structure of the directory data service P(D);

Fig. 8 illustrates the structure of the network service process P(N);

Fig. 9 shows the distribution of directory service processes in a DSS;

Fig. 10 illustrates DSI request flows among DSPs;

Fig. 11 illustrates the reply flows among DSPs;

Fig. 12 is a block diagram of the overall structure of the system of the present invention;

Figs. 13 and 14 illustrate the processing sequences for update and query propagation, respectively, in accordance with the present invention;

Fig. 15 is a representation of a typical directory operation control block;

Fig. 16 shows a representation query P-table and an update P-table (UP);

Fig. 17 is a pictorial representation of a Superior Subordinate (SUP)-(SUB) relationship between directors;

Fig. 18 illustrates the flows for P-table translation for a SUP-SUB relationship;

Fig. 19 is a representation of directories having a PEER-PEER relationship to each other;

Fig. 20 shows the P-table translation for the directories of Fig. 19;

Fig. 21 is a representation of directories having a REPLICATED relationship to each other;

Fig. 22 shows the P-table translation for the directories of Fig. 21;

Figs. 23-26 illustrate a number of other relationships among other directories

Fig. 27 shows the P-table illustrating parallel propagation to a number of SUP directories;

Fig. 28 shows a QP-table for the parallel propagation to SUP and PEER directories;

Fig. 29 shows a QP table for sequential propagation;

Fig. 30 illustrates a typical query message propagated in accordance with the present invention;

Fig. 31 shows a typical response to a query;

Figs. 32 and 33 illustrate representative control blocks used in the present invention;

Fig. 34 illustrates an example network in accordance with the present invention;

Figs. 35 and 46 illustrate different aspects of the sequential propagation of a query in an example case involving a PEER relationship;

Fig. 47 illustrates a network involving a Superior (SUP) relationship;

Figs. 48-51 illustrate the sequential propagation of a query in the network of Fig. 47;

Figs. 52-55 illustrate different aspects of the parallel propagation of a query in the network of Fig. 34; and

Figs. 56-60 illustrate different aspects of the spanning tree propagation of a query in parallel propagation mode.

## DESCRIPTION OF THE PREFERRED EMBODIMENT ·

Prior to a detailed description of the present invention, the following overview of the environment and elements of the invention are given.

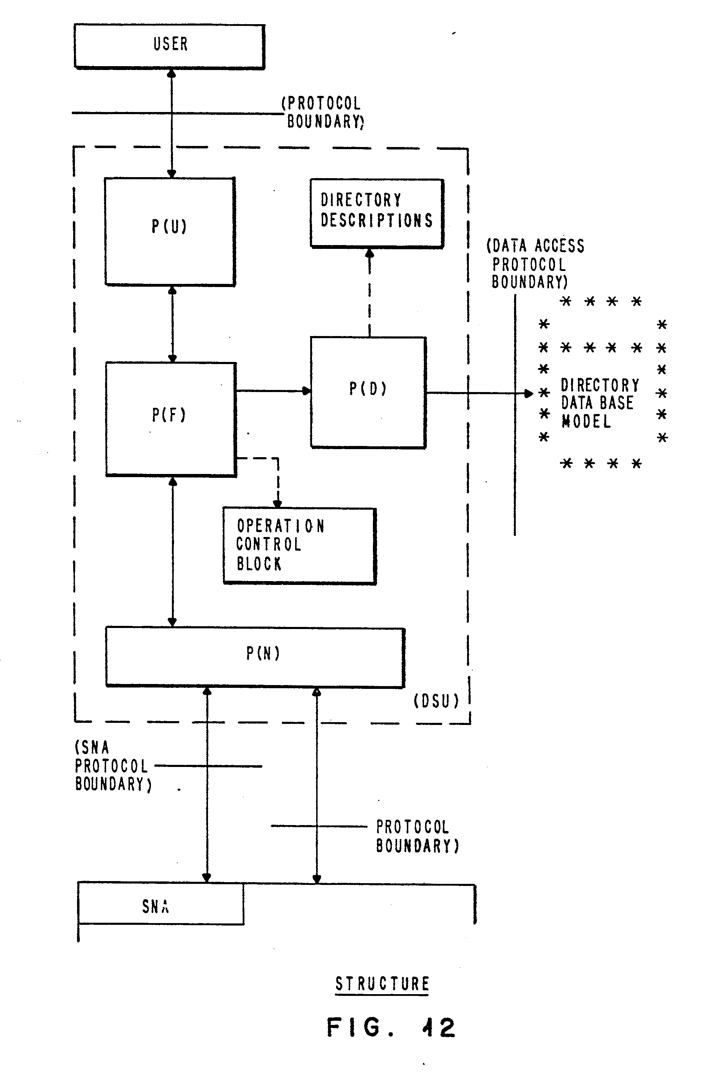

The basic structure of the directory database system of the present invention in shown in Fig. 12. Fig. 12 illustrates the different interfaces or protocol boundaries between the DSU shown in the dotted exclosure and other portions of the system. These boundaries include a user protocol boundary shown at the top of the figure, a data access protocol boundary at the right side of the figure representing the interface between the DSU and the database, and a communications protocol boundary illustrated at the bottom of the figure.

The present structure and method is based on a distribution scheme where an instance of directory service may include on or more DSUs. Each DSU may perform one or more directory functions depending upon the product implementation.

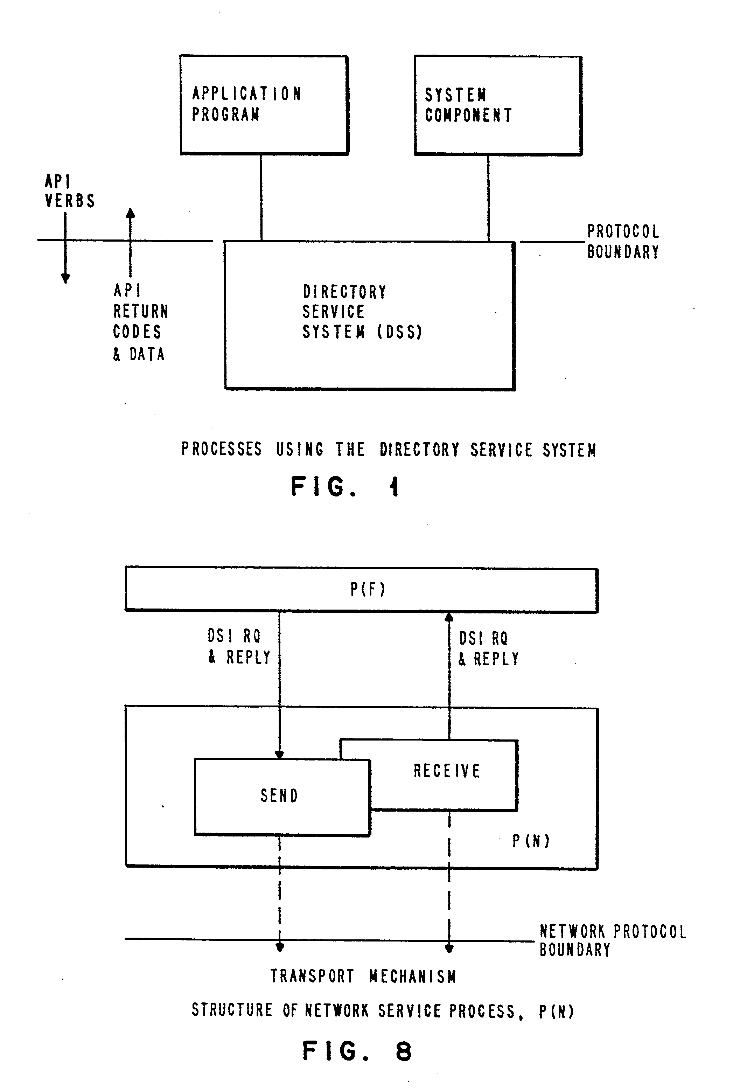

The directory service system shown in Figure 1 is an installation of directory functions in a network of interconnected system. DSS provides the architectural directory services for the user at the API protocol boundary. The participating systems - (products) in a DSS operate coherently under the architected rules such as data distribution - schemes, naming schemes, search/update algorithms, error recovery, synchronization and the like.

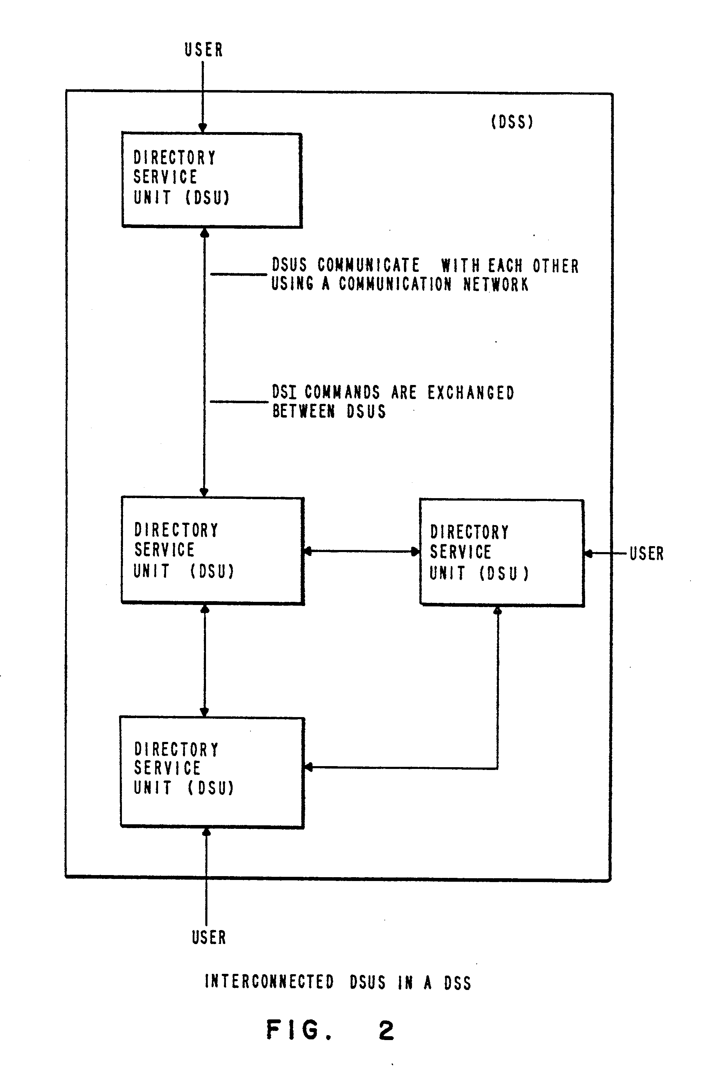

A DSS is comprised of a collection of directory service units distributed throughout the interconnected system network as shown in Figure 2. A DSU represents the directory service component of a system product implementing directory service functions. Although multiple DSUs may exist in the same system (product) for different applications, it is the intent that a single DSU can support many applications programs to eliminate duplication.

## DSU Functions

A DSU is composed of a set of functional components called directory service processes - (DSP) to provide the subsetting basis for implementation by products. There are the following four types of DSPs, each of which performs distinct functions.

1. User Service Process, denoted as P(U) or U, manages the interface (protocol boundary) with users.

2. Directory Function Process, denoted as P-(F) or F, processes the directory functions to service the directory request using the algorithms - (query/update/naming).

3. Directory Data Service, denoted as P(D) or D, manages the access and maintenance of the directory data.

4. Network Service Process, denoted as P-(N) or N, manages the transport network facilities to communicate with other DSUs.

In order to obtain full directory service, it is not necessary that every DSU in the system implement all DSPs. For example, a work-station may implement only some of the functions and obtain full directory service through interaction with a larger system product. Thus, a DSU may contain all four DSPs or some of the DSPs as necessary to meet the functional needs of each product.

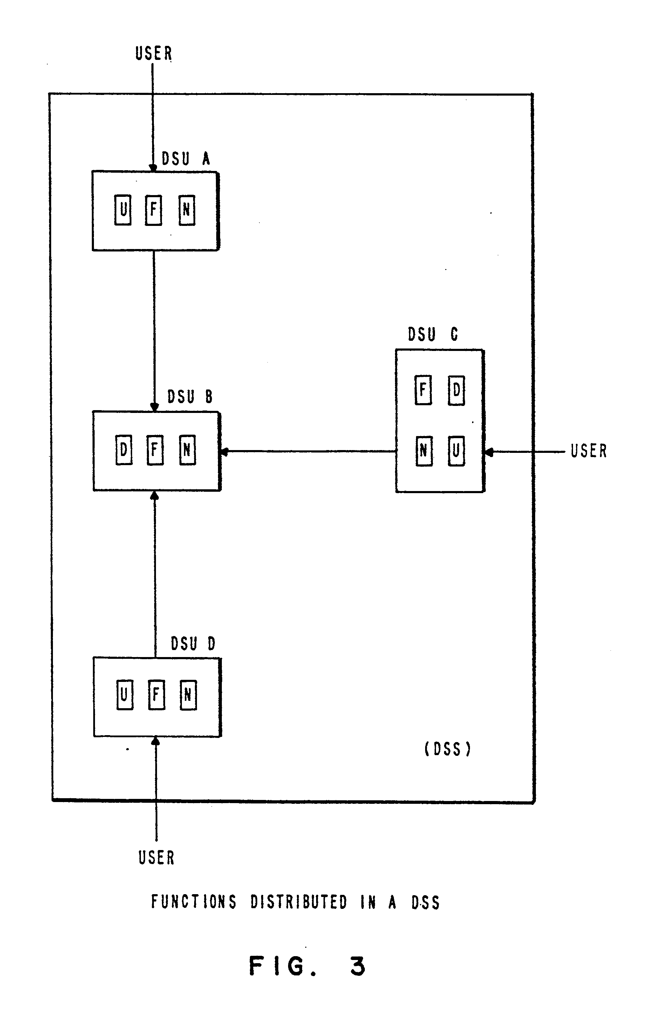

Figure 3 shows an example of implementation options by products in a simple network. DSU A and DSU D represent the work-station which performs the query on an as needed basis and discards the results of the query without retaining it in the storage. This type of product may not have to implement P(D). DSU C represents another type of work-station which retains the results of a query in its local directory. This type of product needs to implement P(D). DSU B represents the file server which acts merely as a data repository to maintain the master directory for the network. This type of product may not have to implement P(U).

## DSU Roles

In order to perform a directory service in a distributed network environment, several DSUs are generally involved and each DSU plays different roles. The origin or source DSU receives a directory request from the user and originates the DSI request. The request is propagated through the intermediate DSUs as necessary to reach the target DSU which can service the request.

## Directory Data Base

A directory is a database that stores mappings from name to information related to name. The directory data base is a set of directories which contain information of a similar type. There is more than one member in the set if the directory data base is distributed across participating DSUs. The directory data base and all members which comprise it are named via a directory type ID (Directory Identifier). For example, a directory database with directory type_ID TELEPHONE may contain name to telephone number mappings. A single DSU may maintain directories of different directory type_ID's, but for any given type_ID, a DSU may contain at most one directory.

## Directory Distribution

Some examples of directory distribution - schemes are as follows:

## Centralized Directory System

In this centralized directory system, there is a single master directory per directory type-ID located at one of the DSUs. The master directory will be updated whenever a change takes place. Directory updating in such a system is relatively easy. However, there are communication costs (traffic) incurred for each query, since all queries compete for the same resources.

## Extended Central

In this centralized directory system, once a DSU finds directory data, he can append this data onto his local directory. Thus, subsequent queries for the same data can be satisfied directly from his local directory, thereby reducing the communication cost as well as time for querying the master directory.

## Multiple Masters

In this directory system, there is more than one master directory per directory type_ID in the system. The degenerated case will be the replicated directory system.

## Local Directory System

## Local

In the local directory system, there is no master directory in the system and each DSU maintains its local directory data. When a DSU cannot satisfy the directory request from its local directory, it queries all other directories in the system until the requested data has been located.

## Extended Local

In this local directory system, once a DSU finds the directory data, it can append this data onto its local directory. Thus, subsequent queries for the same data can be satisfied directly from its local directory, thereby reducing communication costs.

## Replicated Directory System

In the replicated directory system, each DSU in the system has a master directory. The advantage of this system is its fast query response time. The disadvantage of this system is the cost of storing master directory information at each DSU, as well as the communication cost for updating all these directories.

## Hybrid Directory System

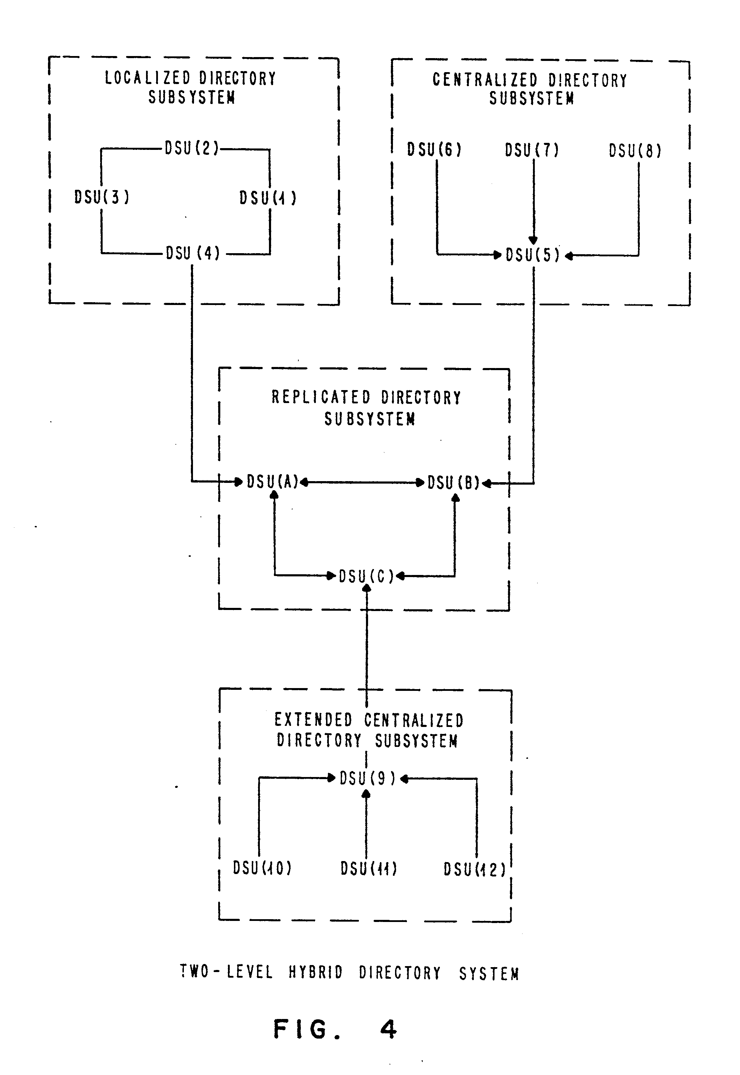

For networks up to a few tens of DSUs, a single level (primitive) distribution scheme described above (that is, centralized, localized and distributed), is usually sufficient. Beyond this number of nodes, hybrid systems combining various primitive distribution schemes in a hierarchical manner, as illustrated in Figure 4, may be attractive. The hybrid multiple level design can offer both types of performance improvements over a single level design.

The hybrid directory system is logically divided in subsystems, or regions, made up of any number of distributed directory services. Each subsystem uses different (primitive) directory distribution - schemes to fit into its regional environment. The hierarchical relationships between subsystems are independent of the actual topology of the physical network.

## DSU-DSU Relationship

A directory service can define the functional relationship among the DSUs distributed in the network due to the following aspects:

The relationship provides a method of organizing the DSUs distributed in the network to allow the definition of simple and efficient protocols for the propagation of DSI commands such as query/update. In particular, the relationship can be used to constrain the set of DSUs to which a particular DSU can send a DSI command for query/update. The relationship is used to control how to distribute the directories, per directory type, among DSUs and how to maintain the respective directory. In some of the directory applications, the relationship of a particular set of DSUs might reflect the organization structure of the enterprise owning the network, even though the network topology does not.

## DSU-DSU Communication

The lines joining the DSUs in Figure 2 indicate the communication paths. Communication between DSUs may be accomplished through the use of any one of several different transport mechanisms. For example, DSUs may communicate with each other by running as a set of transaction models using IBM's System Network Architecture (SNA) or equivalent level of transport facilities. In this case, the lines represent sessions and may not resemble in any way the physical topology of the network. The only assumption that the directory service structure makes about the nature of the transport mechanism is that it provides guaranteed error-free delivery of data from source to destination.

## User DSU Interface

The user makes a directory function request by way of the API verbs to one of the DSUs. The requested DSU interacts with other remote DSUs, and then provides the appropriate response to the user.

## DIRECTORY SERVICE PROCESS (DSP)

This section describes the functions and structure of each DSP. In practice, the DSPs may be implemented either in programming or by a microprocessor.

## End User Service Process P(U)

The P(U) basically manages the protocol boundary to service the end user request. Only P(U) interfaces with the API, thus shielding other DSPs from the end user. At the request of the end user, P(U) parses the received verbs and sends the directory request to P(F) for the information/ response. When it receives the information/response from P(F), it returns it to user to satisfy the original API verb.

## Structure of P(U)

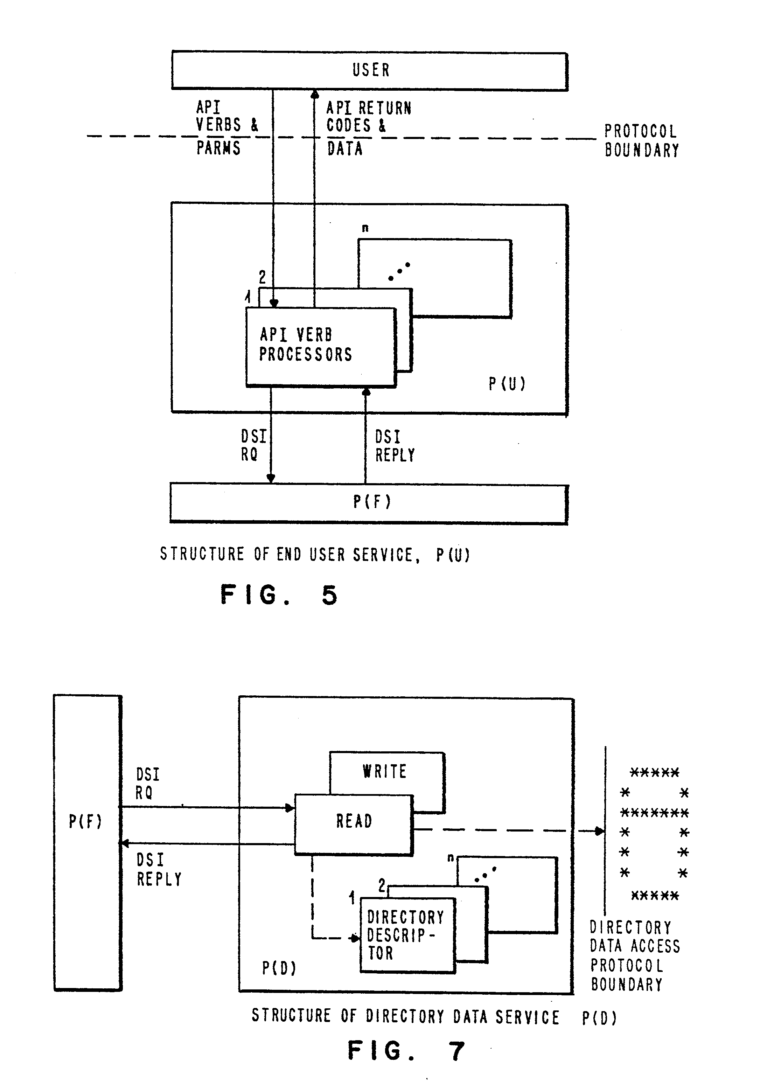

As shown in Fig. 5, P(U) consists of a set of API verb processors, each of which has two components (API send processor and API receive processor). The API send processor is to parse the API verbs and its associated parameters from the user and construct the DSI request encoding to be sent to P(F) for specific directory tasks as requested in the API verbs. The API receive processor is to decode the received DSI replies and present the information/data (carried in the reply) to the user protocol boundary according to the defined API rules. Directory Function Service: P(F)

The P(F) performs the essence of distributed directory functions such as search/update algorithms and naming algorithm. P(F) is knowledgeable of the existence of distributed directories and name database (if any), and it provides a focal point for maintaining currency among them in the system.

The P(F) is responsible for providing the information response satisfying the request from P(U). P(F) maintains/ manages the directory operation control block to be used by the directory algorithm facilities. The control block contains the algorithm control information such as affinity lists. P(F) uses this information to determine the best way to get information and respond to the requests from P(U). P(F) interacts with other remote P(F)s as necessary to locate the target P(F) (that is, the P(F) directly linked to the P(D) which can access requested directory data). The target P(F) obtains the directory data from the D(P), and sends it to the source P(F) (that is, the P(F) that originally received a request from P(U)). Then the source P(F) passes the directory data to the P(U) that originated the request. P(F) is the bridge form of service interacting with both P(U) and P(D), as well as P(N).

## Structure of P(F)

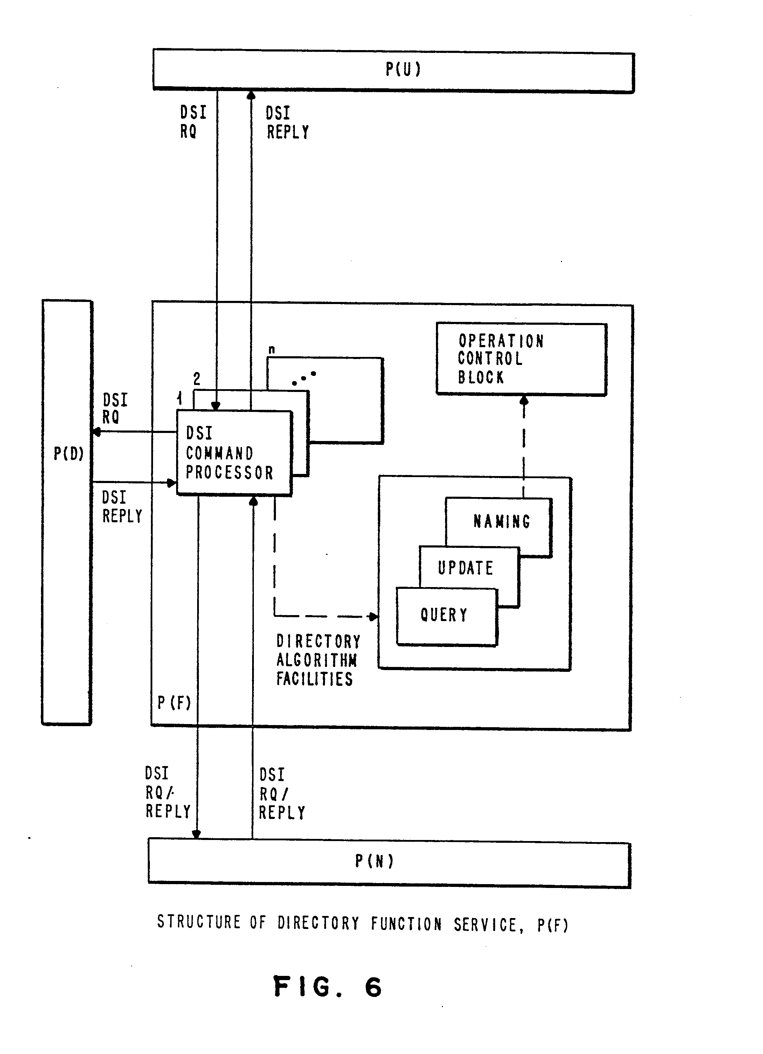

As shown in Fig 6, P(F) consists of a set of DSI command processors, each of which has two components (DSI request processor and DSI reply processor) to process the received requests and replies respectively. The format of the input to the P(F) should preserve the DSI command construct regardless of whether the command is received from the P(U) or the remote P(F)s through the communication network.

The DSI request processor the DSI processes the DSI requests received from either P(U) or remote DSUs. It uses the directory algorithm facilities such as the query/update propagation algorithm and the name assignment algorithm as appropriate. The directory algorithms determine the target DSU which can provide the requested information. If the receiving DSU is determined to be the target DSU, the DSI request processor fetches the requested information by way of P(D) and sends the DSI reply carrying that information to the origin DSU. Otherwise, the DSI request processor passes the received request to the other DSU as the algorithm determines, based on the affinity lists of the operation control block.

The DSI reply processor processes the DSI replies which carry the information requested by the DSI requests. If the receiving DSU is the origin DSU (which originated the DSI request), the DSI reply processor passes it to the local P(U). Otherwise, it sends the received DSI reply toward the origin DSU.

## Directory Data Service: P(D)

The P(D) manages the directory data access protocol boundary to access and maintain the directory data. Only P(D) has knowledge of the structure of the directory contents by way of the directory descriptors specified by the users, thus shielding other DSP's from the directory data structures.

The P(D) receives the directory data request - (query, update and so on) from P(F), performs the appropriate operation on the directory data by way of the data access protocol boundary and responds as appropriate to the P(F). It is the responsibility of P(F) to locate the target P(D) (that is, the P(D) maintaining the requested directory data) before sending a request to that P(D).

## Structure of P(D)

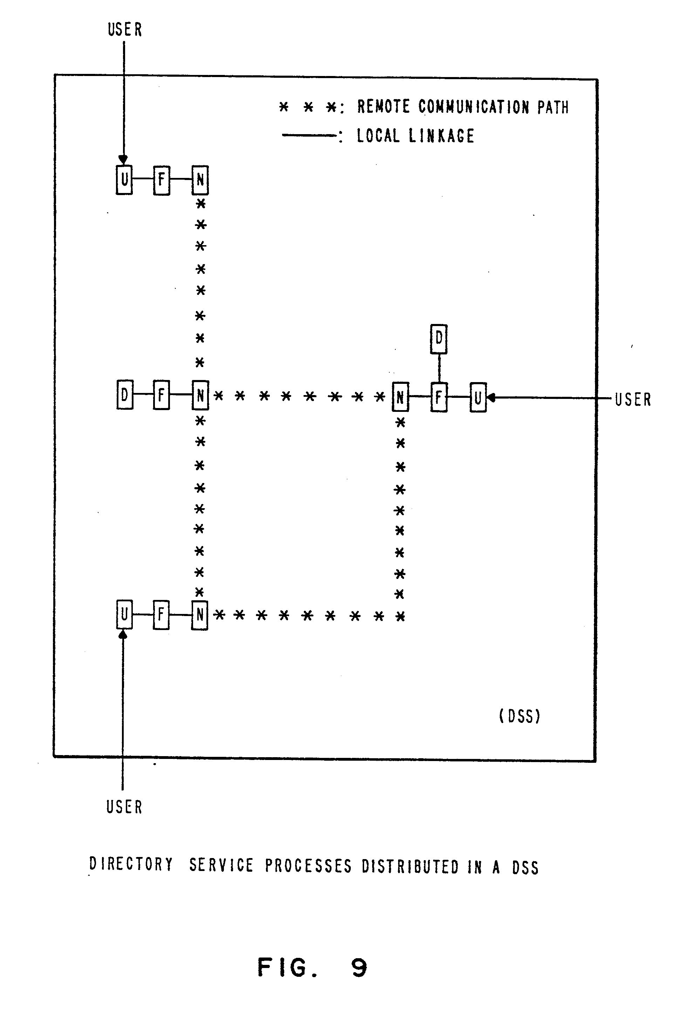

As shown in Fig. 7, the P(D) consists of two processors, Read and Write. The read processor services the DSI requests (for example, query), from P(F), which requires reading the directory data through the data access protocol boundary. It reads the requested directory data according to the directory descriptors and returns the retrieved data by way of the appropriate DSI reply to P(F). The write processor services the DSI requests (for example, update), from P(F), which requires writing the directory data through the data access protocol boundary. It performs the directory data update as requested, according to the directory descriptors, and returns the results, if necessary, via the appropriate DSI reply.

## Directory Network Service: P(N)

The P(N) provides the ability to send and receive the DSI commands between DSUs. It interfaces with the transport mechanism used for DSU-DSU communication, thus shielding other DSP's from the networking function. P(N) controls the network protocol boundaries to achieve the P(F) to P(F) conversation between remote DSUs. The content of DSI request/replies are basically transparent to P(N), and the function of P(N) is merely to deliver the DSI requests/replies to the remote P(F)'s through the network. Also, the P(N) does not determine where to send queries or updates. This is determined by the propagation algorithm in the P(F).

## Structure of P(N)

As illustrated in Fig. 8, the P(N) consists of two processors, send and receive. The send processor is to control the sending of data in a DSU-DSU communication. The receive processor is to receive data from the DSU-DSU communication. The functions of these processors have direct dependencies on the protocol boundary of the network used for DSU-DSU communication. The directory structure describes the specific functions of P(N) required to use the DSU-DSU transport mechanisms.

## Relationships Between DSPs

A DSS can be viewed as a collection of an arbitrary number of P(U)s, P(F)s, P(D)s and P(N)s - (Figure 9). A DSU must contain at least a P(F) and a P(N), although the levels of complexity of the functions to be performed vary depending on the roles of the DSU within a DSS. DSI commands are used as the message units to carry information from one DSP to another. There are two types of DSI commands, DSI request and DSI reply. The DSI request is used to carry the specific request information to the target DSP, and the DSI reply to carry the information/response to the origin DSP.

Based on the definitions of DSPs discussed above, the following relationship can be constructed to depict the message flows among DSPs -P-(U), P(F), P(D) and P(N).

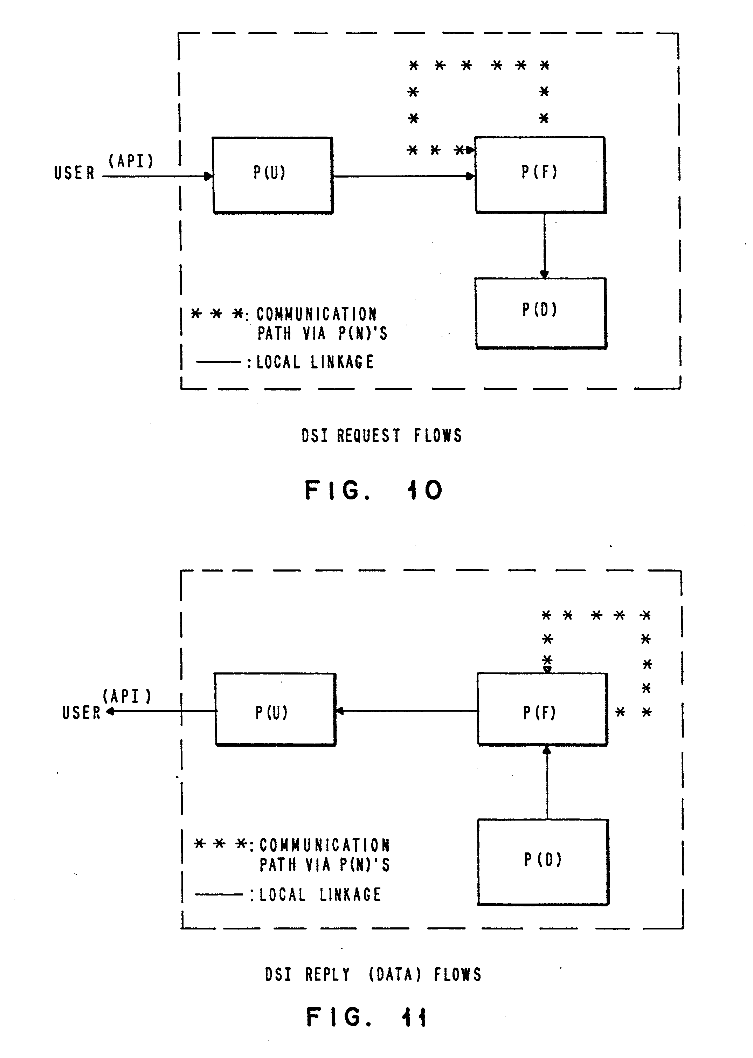

Figure 10 shows the DSI request flows among DSPs. The possible flows are: (1) P(U) -P(F), (2) P-(F) -P(F) by way of P(N)s, and (3) P(F) -P(D). Figure 11 shows the DSI reply flows among DSPs. The possible flows are: (1) P(D) -P(F), (2) P(F) -P-(F), and (3) P(F) -P(U).

## Usage of Protocol Boundaries

Thus, the present system defines one protocol boundary for its users and uses three different protocol boundaries to formally describe the system structure. A DSU provides the protocol boundary for the user to send the directory requests to DSU and receive the directory information/response from DSU. DSU uses the protocol boundary of a communication network to communicate with another DSU in another system. Another protocol boundary is used by DSU to control accesses to and read and write the data in a directory data model. The functions of these verbs may be implemented in a product unique manner.

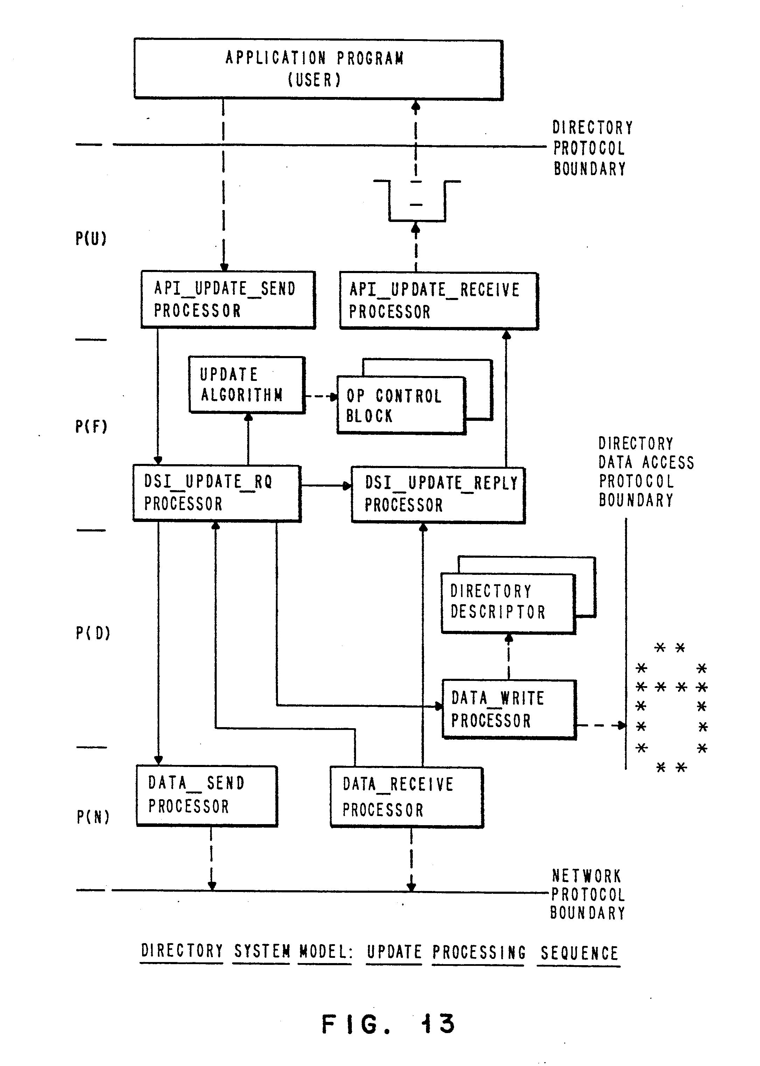

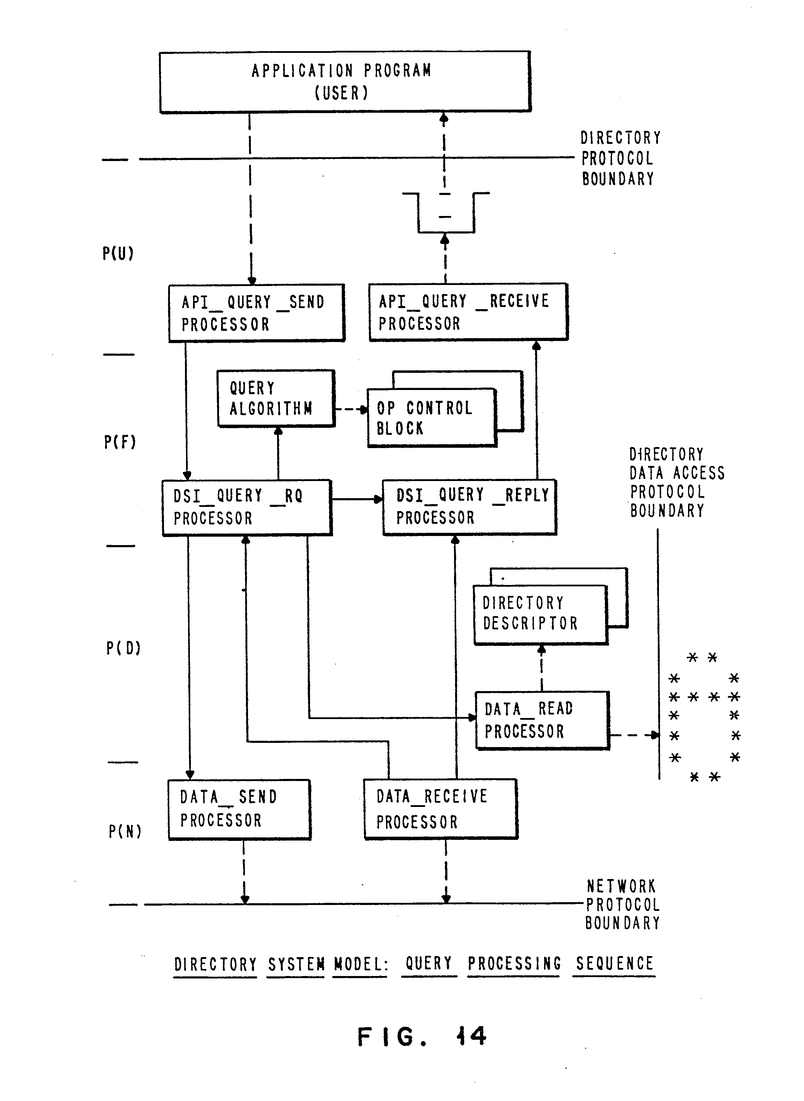

In connection with Figures 13 and 14 illustrating the processing sequence for update and query propagation, respectively, there are separate processors shown for update reply, update request, query reply and query request. However, if a given DSU is not involved in query propagation, only the update processors are required.

The invention employs a Directory Operation Control Block whose structure and function may be described as follows :

## DIRECTORY OPERATION CONTROL BLOCK

The directory operation control block contains information which controls the directory system functions performed on behalf of the user. This component includes search (query) algorithm control information, and internal tables which define the relationship of this member user directory with other members (at other DSUs) within a particular directory database.

The directory operation control block (Fig. 15) supports directory system services such as automatic search and automatic maintenance to the user. This control block is associated with a particular member of the directory database, and the information contained therein is location-dependent. This control block is usually initialized by way of directory system generation parameters, although changes to internal operation of the directory system for this member may occur dynamically through the protocol boundary.

The directory operation control block contains the affinity list, search algorithm control field, integrity parameters field, and access control field, which can be described as follows.

### Affinity List

The affinity list describes the logical relationship between this member and other members of a particular directory database. The affinity list data values describe whether other directory database members are superiors, peers, or subordinates to this member, as will be described more in detail below. How directory data is distributed, and logically configured, can therefore be derived from affinity list data values. A consequence of affinity list design enables a reconfiguration of user data - (say, from a centralized to a distributed configuration) by subsequent changes to affinity list data values.

### Query Algorithm Control

This field supports various user options of the automatic name resolution function. Such options may include action to be taken by the DSU upon determining a "not found" condition at this member, such as report an "error", continue searching using internal search algorithms, or return a data value to the user.

There can be cases where a cascaded search is possible using participating members' affinity tables. Similarly, some members who do not support this capability can terminate the search from continuing beyond this point; this may be useful to support products of varying capabilities in a depth-first search algorithm.

## Integrity Parameters

Degrees of error tolerance, or of consistency of user data within the distributed directory database are supported by way of the integrity parameters field. These can be described by the user at implementation.

## P-Tables

The P-tables at the various DSUs define how each DSU interact with one other DSUs in performing queries. Each DSU in the network contains and P-tables for every directory type for which it may perform undirected queries, and the P-table in a DSU contains the identities of some of the other DSUs in the network. It must be possible to establish a communication path with any DSU that appears in a P-table.

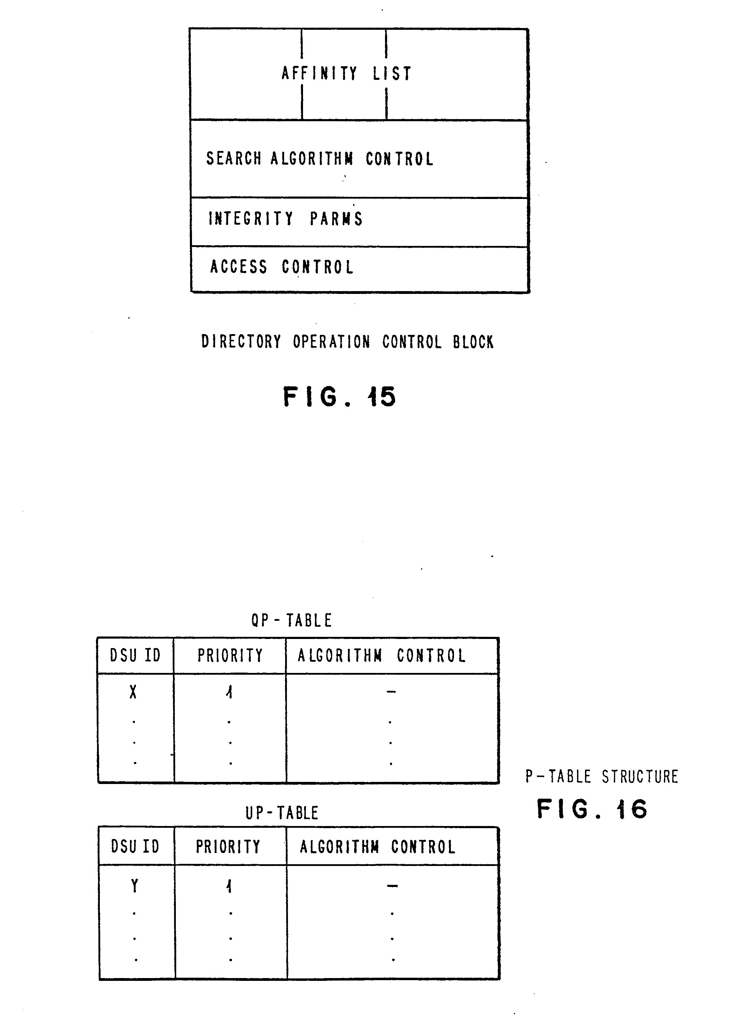

The P-table consists of two parts, a query P-table (QP-table) and an update P-table (UP-table). The QP-table defines the DSUs to which queries are sent. The structure of the tables is shown in Fig. 16. In addition to containing the identities of the DSUs, these tables define the order in which the DSUs are queried, by specifying a numeric parameter or priority associated with each DSU. The DSU with the highest priority is sent the query message first. DSUs with equal priority receive the messages in parallel. As Fig. 16 also depicts, there is an extra algorithm control field associated with each DSU entry, whose function will be described below.

The entries in each P-table may be created in several different ways. They may be linked directly to the way in which data is distributed through the system, something which may be specified in the form of an affinity table. Alternatively, the P-tables may be defined directly at SYSTEM GENERATION time and remain unchanged through the entire directory operation, or they may be updated dynamically. They may also be dynamically created during operation or through other mechanisms such as queries to a "directory of directories" or through input from the network routing function.

## Access of P-Tables

The protocol boundary in the system may permit only indirect access to the P-tables. The indirection is in that the user does not specify the actual entries in the P-tables, but, instead, specifies the way in which he wants data distributed through the network using certain data distribution primitives. These notions are then translated automatically into entries in P-tables.

The advantage of this indirect approach is that it enables the user to think of the directory structure only in terms of data distribution, something that is intuitive and easy to understand, while shielding him from the complexities of understanding the flow of queries. The disadvantage of this approach is that it limits flexibility and prevents the user from exercising the full range of query propagation options that is possible if direct access to the P-tables is permitted.

## DATA DISTRIBUTION PRIMITIVES

The user may define some data distribution relationships between the DSUs in the network. This section describes the relationships, how they are used to set up a directory service system, and how these relationships then get translated into P-table entries.

In understanding the motivation behind the translation, it is important to understand the "duality" between queries. In particular, if DSU A always sends an update to DSU B whenever it changes its directory, there is no necessity for DSU B to query DSU A. Conversely, if DSU B always queries DSU A, there is no necessity for DSU A ever to send updates to DSU B. The translation from data distribution to P-table entries is designed to take this duality into account and thus to conserve on the use of communication bandwidth. The relationships are with respect to a specific directory type ID. It is possible and indeed likely that the relationship for different directory type ID's will be quite different. The following data distribution relationships can be defined:

## Superior (SUP)-Subordinate (SUB)

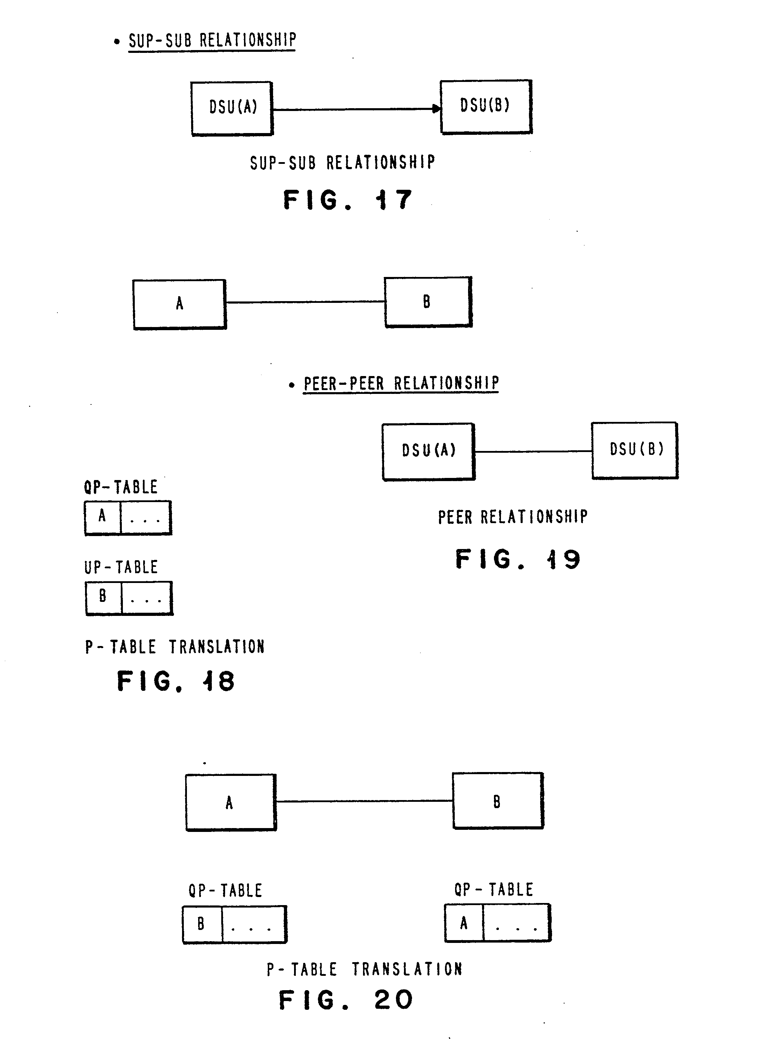

The relationship is depicted pictorially by a directed arc from A to B, as shown in Fig. 17. A being the SUB and B being the SUP. The relationship is established by specifying at A that B is a SUP of A and by specifying that A is a SUB of B. This relationship implies that under "normal" conditions a communication path from the SUB to the SUP through the transport mechanism exists. In terms of data distribution, it implies that if X is the directory type ID for which this relationship has been defined, then B's directory type ID is a superset of A's directory of the same type ID.

The translation into P-table entries attempts to preserve the nature of the relationship. As B is the SUP of A, both queries are propagated from A to B. However, as B's directory contains all the information that A's directory contains, B neither queries nor updates A. The translation to P-table entries in A and B is depicted in Fig. 18.

## Peer-Peer Relationship

This relationship is depicted pictorially by an undirected arc between the PEERs, as shown in Fig. 19. The relationship is established by specifying at A that B is a PEER of A and by specifying at B that A is a PEER of B. This relationship implies that the PEERs can communicate with each other through the transport mechanism and that the user would like them to communicate directly in order to perform directory functions. It does not imply any relationship in terms of data distribution. Thus, in the translation to P-table entries, queries are exchanged between PEERs. Fig. 20 shows the translation.

## Replicated Relationship

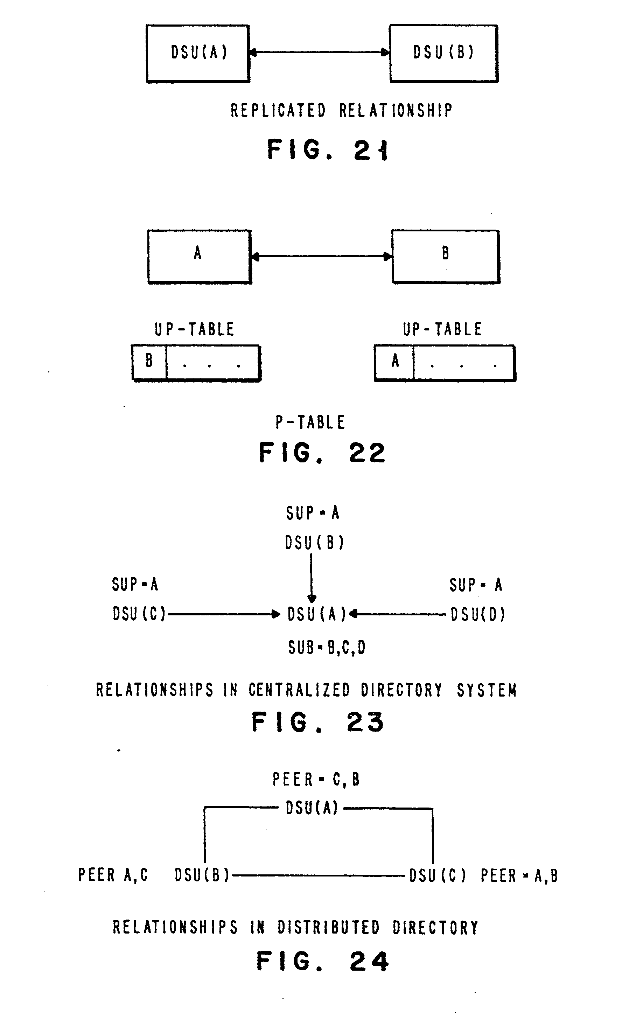

This relationship is depicted pictorially by a bidirectional arc between the DSUs as shown in Fig. 21. The relationship is set-up by specifying at A that B is a REPLICATE of A and by specifying at B that A is a REPLICATE of B. This relationship implies that the DSUs can communicate with each other through the transport mechanism. In terms of data distribution, it is equivalent to two SUP-SUB relationships; that is, B is a superset of A and A is a superset of B. Clearly, this can be satisfied only if A and B are identical. The translation to P-table entries is designed to preserve the replication by propagating updates between the DSU's. Fig. 18 depicts the translation.

## Other Relationships

The examples shown in Figs. 23-26 illustrate that the definition of relationships between the DSUs in a network determines the data distribution. It will be noted that the relationships define a network over which queries are normally propagated. This network is usually a sub-network of the network formed by defining all possible communication paths. In other words, there may be communication paths available between DSU's which are not normally used in query propagation.

## PRIORITIES OF THE ENTRIES

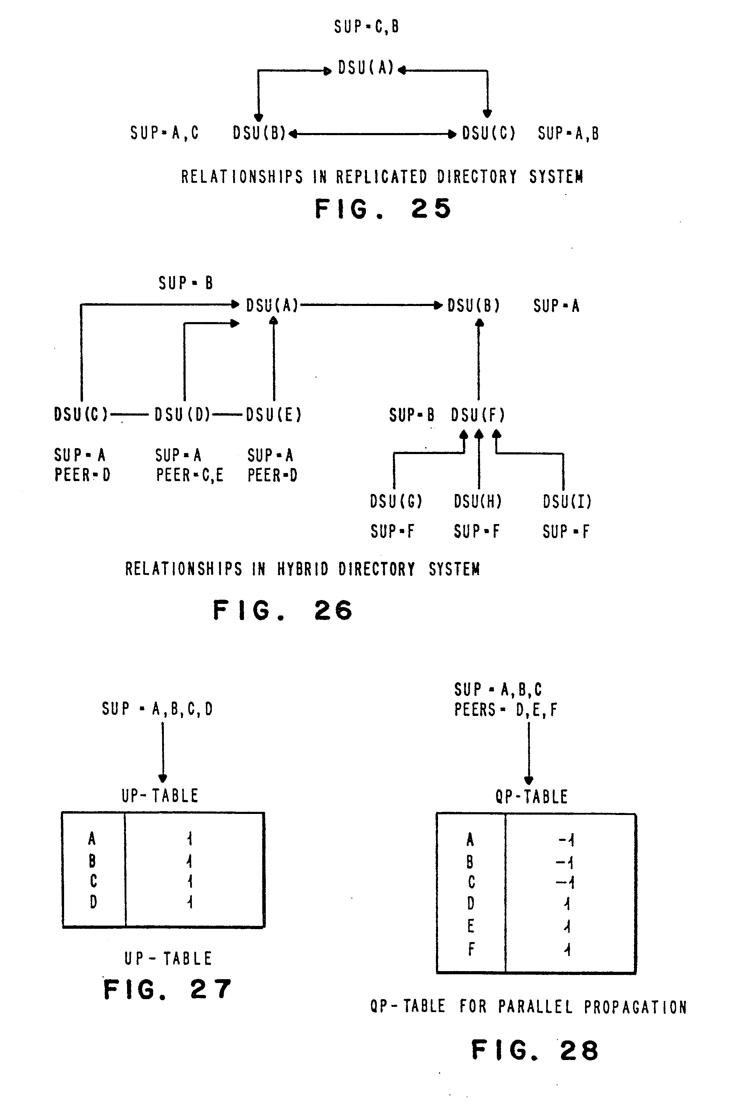

It has been shown how the data distribution primitives defined get mapped into entries in the QP-table and the UP-table. Now it will be shown how the priority of these entries is established. Considering the UP-table, it is advantageous to propagate queries in parallel to all SUP DSU's as this would enable the update to reach the appropriate destinations as soon as possible. Thus, in the translation to P-table entries, all entries are given equal weight. Fig. 27 shows an example.

In connection with the QP-table, both SUPs and PEERs are entered into the table. In propagation queries, it is not always the case that parallel propagation is desirable. In some instances, sequential propagation may be preferable as it may result in less bandwidth being used in query propagation. Thus, two basic methods, the parallel and the sequential, are provided for constructing P-tables. The choice of parallel or sequential can be controlled at the time of system definition. The parallel approach is very similar to that used in the construction of the UP-tables. All SUP entries are given equal priority and all PEER entries are given equal priority. The priority of the SUPs, however, is higher than the priority of the PEERs (that is, a smaller numerical value). For reasons that will become apparent when the algorithms are described, the SUPs are assigned a negative number as priority. Fig. 28 shows an example.

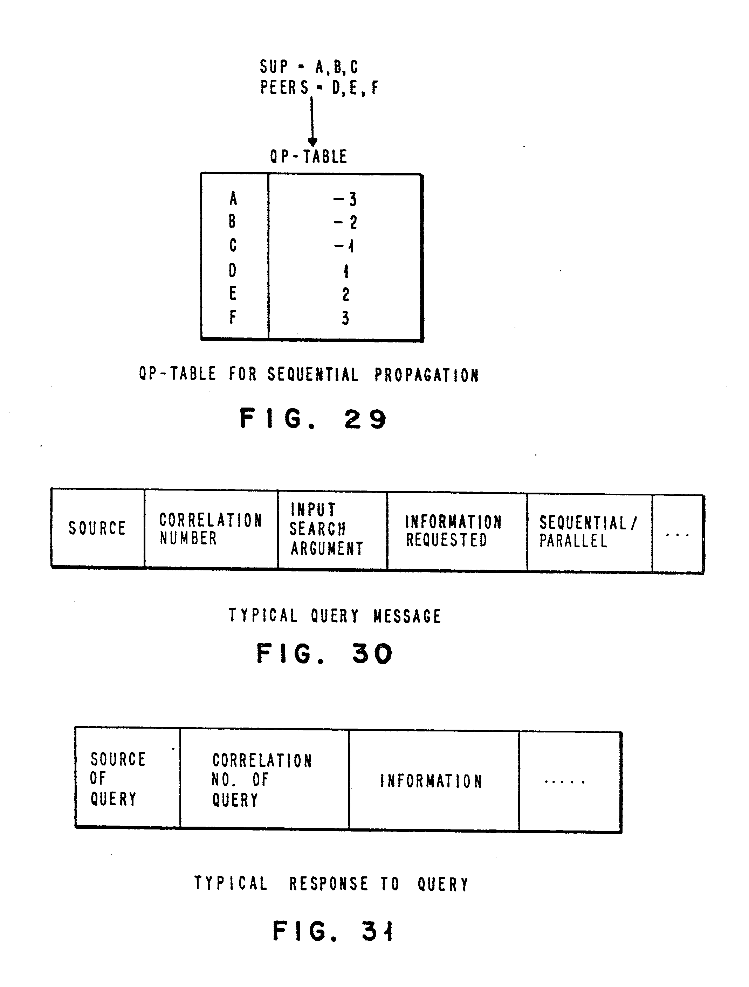

This sequential propagation approach assigns priority number to the DSUs in ascending order, with the SUP's having the smaller numbers, (again chosen to be negative), and the PEER's the larger number (positive). Fig. 29 depicts this through an example.

The determination of whether parallel or sequential propagation is used is usually made at create-configuration time or automatically by means of a predefined user algorithm. It is important that all the DSU's participating in a given query use the same mode of propagation. Thus, it is not permitted for the originating node to propagate a query in a sequential fashion and for intermediary nodes to relay that query in parallel fashion. In order to ensure this, the query messages propagated in the network contain a bit which indicates whether the DSU that initiated the query used sequential or parallel propagation. Intermediary nodes use the method of propagation indicated in the query message, thereby ignoring the priorities in the QP-table, and creating a new set of priorities if the query message specifies a different mode of propagation than the mode for which their QP-tables are set up.

RELATIONSHIP RULES

The relationships of the DSUs in the network for a given directory type ID should satisfy certain rules. These rules are important in order to maintain internal consistency of the P-table in a given DSU, as well as in the relationship between P-tables in different DSUs. The rules are as follows:

If full accessibility is to be preserved, then for any two DSUs A and B, one of the following must hold:

1. There is a path consisting entirely of undirected arcs between A and B.

2. There exists a DSU C so that there are paths consisting entirely of directed arcs, traversed in the indicated direction, from both A and B to C. It will be noted that a degenerate case where this condition would be satisfied would be if there was a directed path from A to B or vice versa.

In order for the propagation algorithms not to use an unnecessarily large amount of bandwidth, only one of 1 and 2 above must hold.

If B is PEER(A), then D cannot be SUP(A) or REPLICATE(A). Similarly, if B is SUP(A), then B cannot be PEER(A) or REPLICATE(A); and if B = REPLICATE (A) then it cannot be PEER(B) or SUP-(A).

THE BASIC QUERY PROPAGATION MECHANISM

This is shown in block diagram form in Fig. 14. The query message sent between the DSUs contains all the information from the initial inquiry and, in addition, the identification of the DSU that originated the propagation of the query (the source DSU), and a correlation number which is generated by the source DSU. Fig. 30 shows a typical query message.

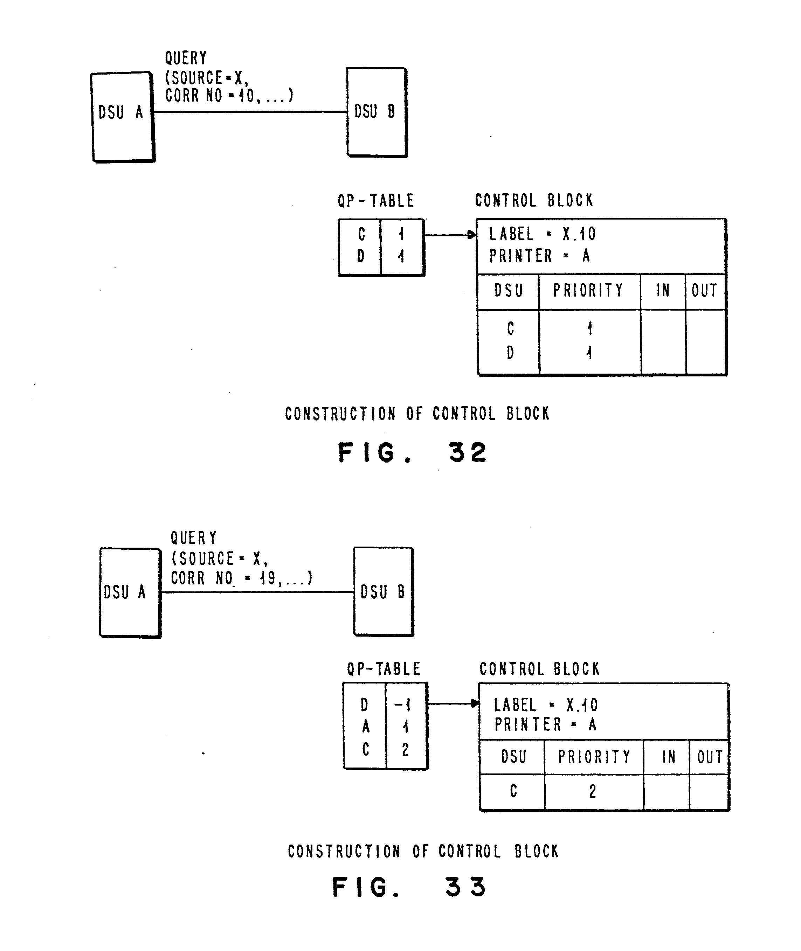

Any response message contains the information generated in response to the query and, importantly, also includes the identification of the DSU that was the source of the query and the correlation number contained in the query. Fig. 31 shows a typical query response message. The combination of source DSU identification and correlation number is used by the various DSU's in the network to uniquely identify that query and to correlate responses to the query with the query itself.

The DSU identities are required to be unique. In order for the combined DSU identity plus correlation number to be unique, it is necessary for the source DSU to ensure that it uses a correlation number only if it is certain that no instance of any previous query message that it may have generated with the same correlation number remains in the network. A practical method of achieving this is to use as a correlation number a time-stamp or a constantly incremented sequence number, taking care to ensure that the size of the correlation number field and therefore, the time between wrapping of the number is large. The propagation of query messages is guided by the P-tables for that directory type at each DSU.

Sequential Propagation

The algorithm is essentially a message driven distributed version of depth-first search. The same code runs in all the DSUs, including the source of the query and the DSU that finally satisfies the request. It is sequential in the sense that there is only one message related to a query in the network at any one time. The message could be either the query itself or a response to the query. The receipt of a message can be interpreted as obtaining control of the query propagation, and in sequential propagation only a single DSU has control at any one time. The source DSU selects a DSU from the QP-table and sends the query message to it. It then waits until it receives the response from that DSU before proceeding with searching the rest of the entries in its QP-table.

The DSU that receives the query performs in a similar fashion. It selects a DSU from its QP-table and sends it a query. If this DSU has already been searched, it will respond immediately. Otherwise, it will in turn propagate the query further. When a DSU receives a response to a query, it forwards it to the source of the query if it is a positive response. Otherwise, if the response is negative, it scans its P-table to see if there are any entries with which it has not exchanged a query and response. If so, it sends that DSU the query, and if not, it responds negatively to the source of the query.

QUERY CONTROL BLOCK

In order to describe the sequential propagation algorithm more precisely, a data structure is built by each DSU that receives and propagates the query. This data structure, the query control block, is created from information in the QP-table and in the query message itself. The query control block contains a pointer to the API or another DSU to indicate the origin of the first copy of that particular query. The query control block contains the correlation number of the query and the ID of the source DSU. It also contains the identities of the DSUs to which queries may be propagated. These DSUs consists of all the entries in the QP-table with to exceptions:

1. If the query was received from another DSU which is itself in the QP-table, then that DSU is not entered in the control block.

2. If the query was received from another DSU which is in the QP-table with a positive priority (a PEER), then no entries with negative priority numbers (a SUP) are copied into the control block. This second rule ensures that queries from PEER's are propagated only among PEER's, the assumption being that the source DSU would have first queried the SUP's before querying the PEER's.

Together with the identity of the DSU's, their corresponding priority numbers are also copied from the QP-table into the query control block. As indicated previously, these priorities may be recomputed if the mode of propagation to be used differs from the mode for which the tables are set up. In addition, for each entry, the control block contains two extra fields. The first extra field corresponds to messages sent out and the second field corresponds to messages received and these will be labeled as OUT and IN, respectively. Fig 28 and Fig. 29 show examples of the construction of query control blocks.

Example 1.

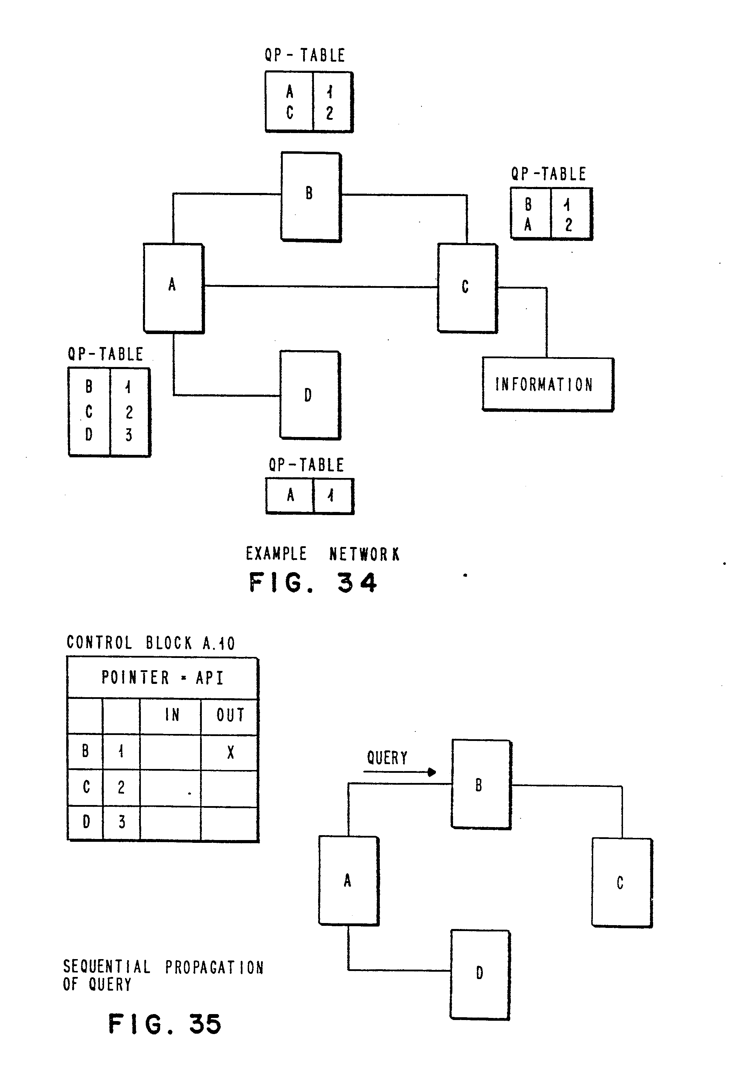

Consider a typical example of a network consisting of four DSUs A, B, C and D connected as shown in Fig. 34. All connected DSUs are defined to be PEERs and sequential propagation is chosen, resulting in QP-tables at the various DSUs as shown in Fig. 34. Assume that a user at DSU A initiates a query and further assume that the information that is being requested is in the directory of DSU C. The query processor at A first checks the local directory. Upon not finding the required information, it chooses a correlation number for that query, say correlation number = 10, and it creates a control block for that query with the label A.10. It also indicates in the control block the origin of the query, in this case the API, and copies the contents of the QP-table into the control block as shown in Fig. 35.

The next step is to propagate messages in the network. DSU A selects the entry (or entries) in its QP-table with the smallest priority number. In this case this entry is DSU B. It sends DSU B a query message, marks the OUT field corresponding to DSU B, and waits until it gets a response. Fig. 35 describes the state of the system at this point.

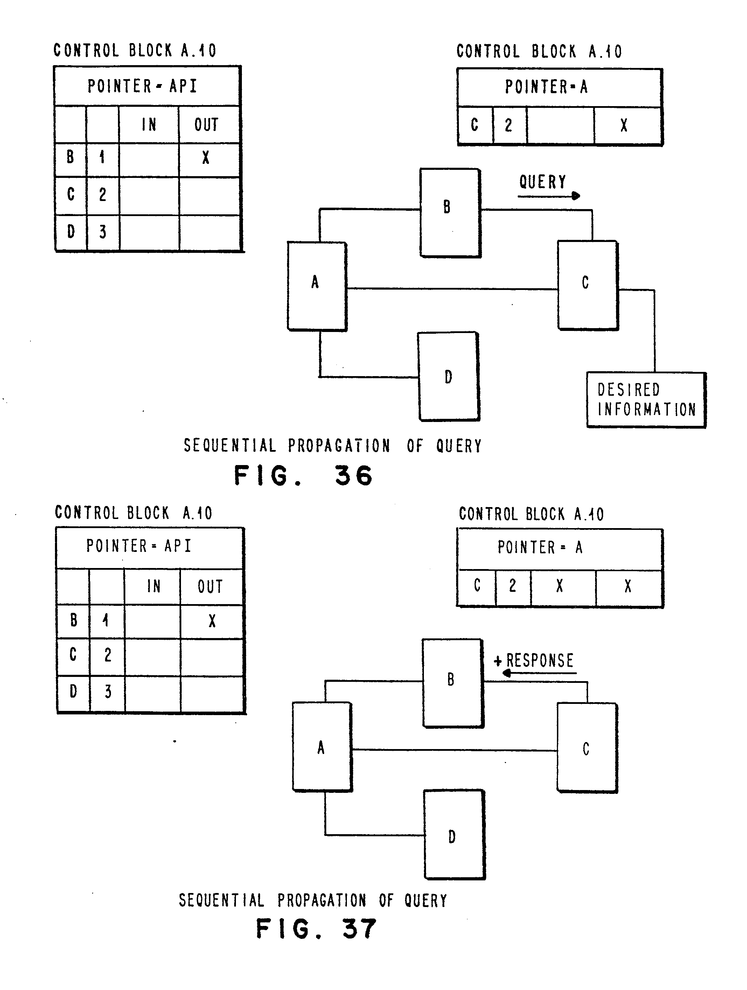

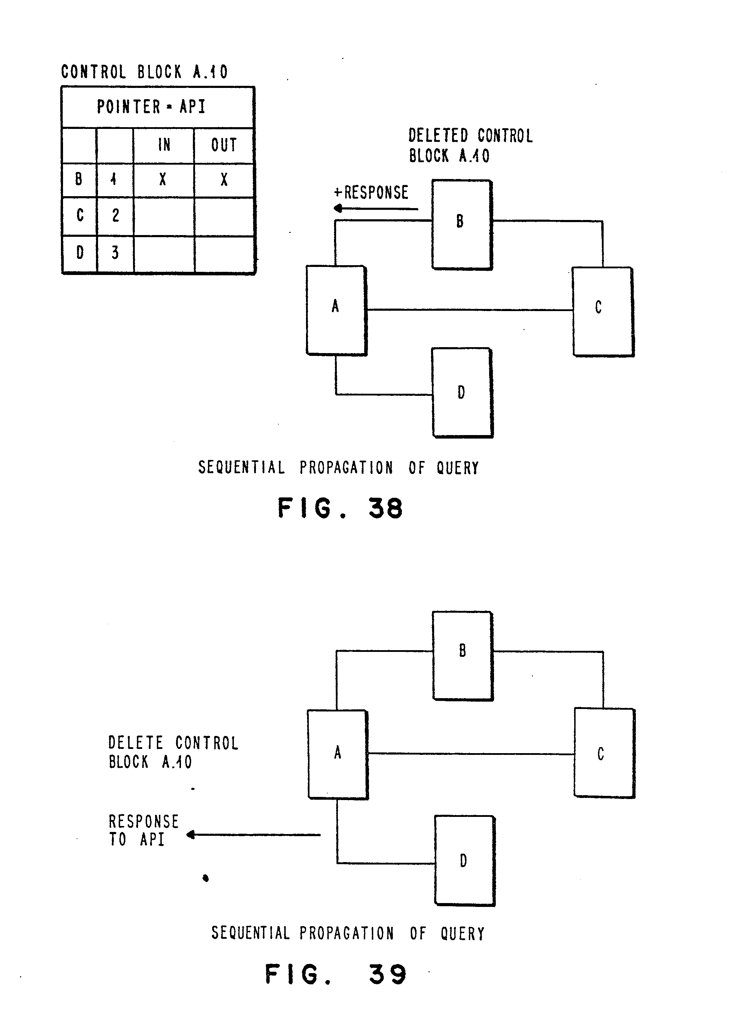

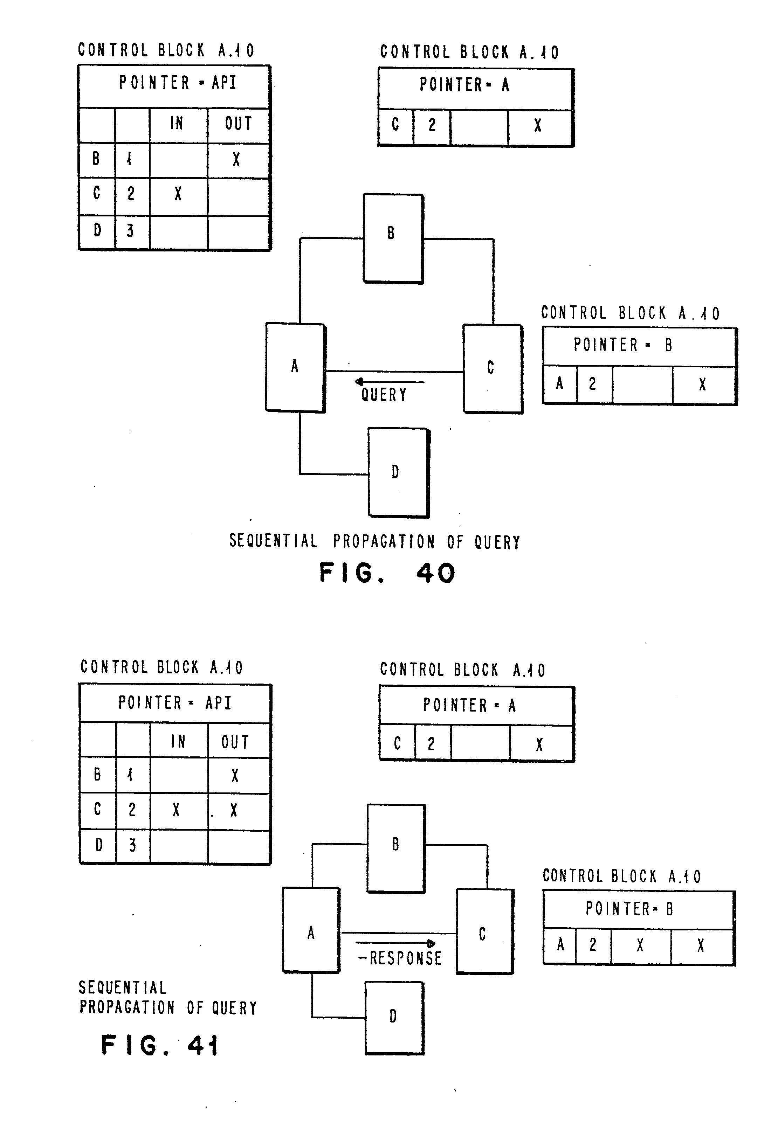

Upon receiving the query from A, B first checks its local directory. Upon not finding the required information, it creates the same type of control block as A did, marking it with the label A.10 and entering, as pointer, DSU A. As before, to create the body of the control block it copies the QP-table and adds two extra fields. However, it removes the origin of the query, A, from the control block as it is not necessary to propagate queries back to the source. It then sends a query to C, the DSU with the highest priority in the control block. Figure 36 describes the state of the system at this point. C receives the query, finds the information in its local directory, and sends back a response to B. Figure 37 shows the system at this state. B receives the response, recognizes that it is a response to a query for which it has a control block in existence, and forwards the response, as indicated by the pointer in the control block, to DSU A. It then deletes the control block. Figure 38 depicts the system at this state. DSU A receives the response and, as indicated by the control block for the query, forwards the response to the API and deletes the control block as shown in Figure 39.

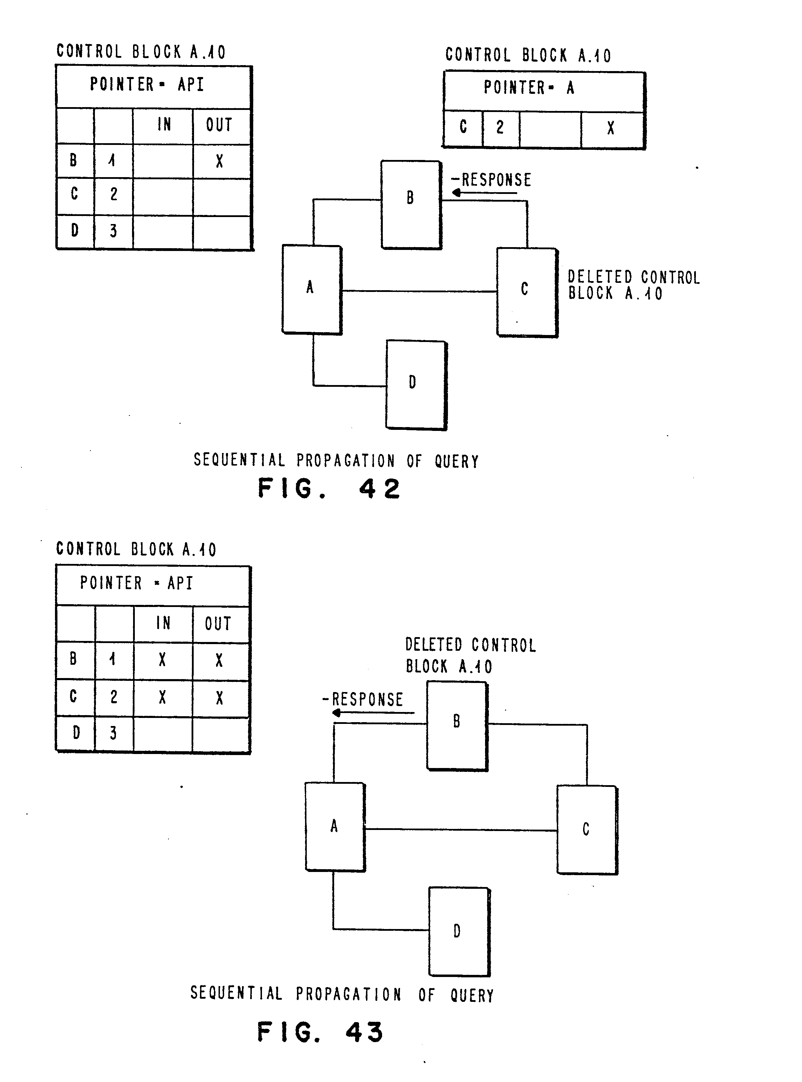

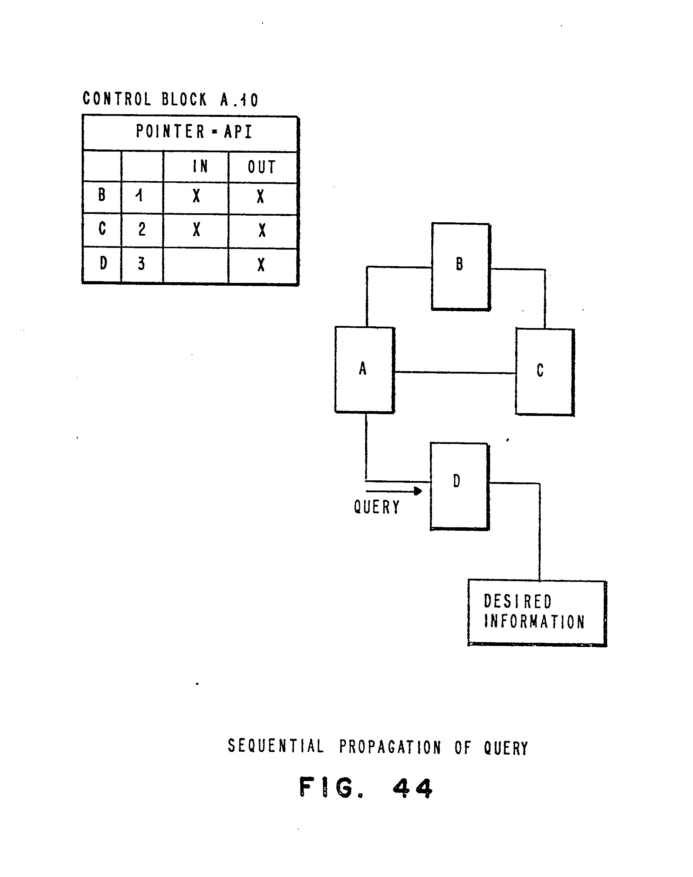

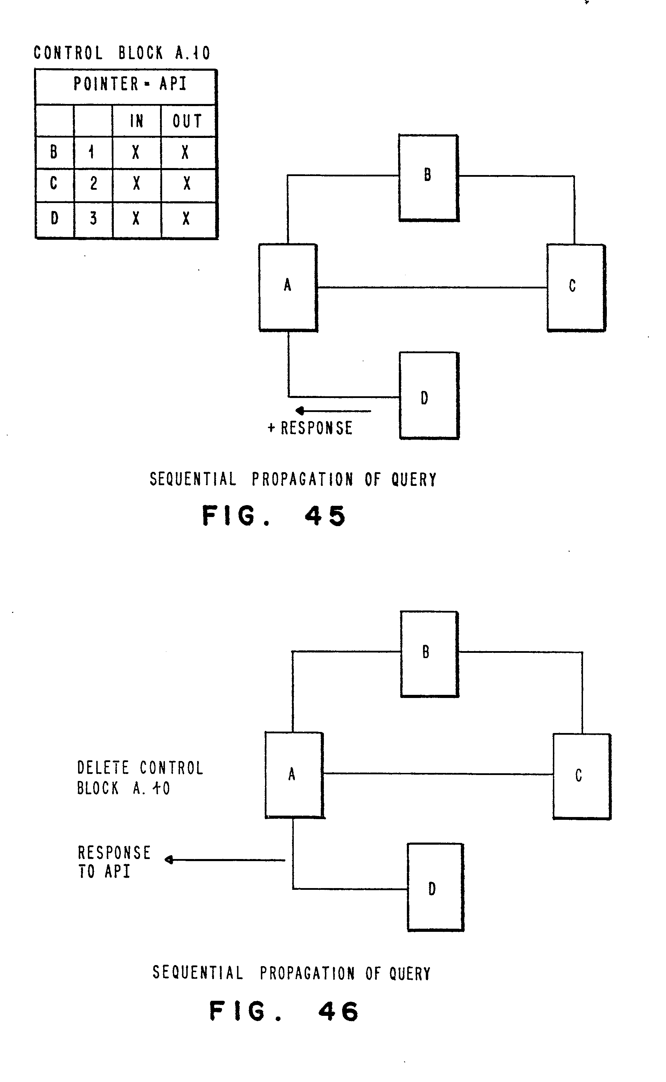

Now consider what may have happened if C had not possessed the information. The first two steps, as indicated by Figure 35 and Figure 36 would have been identical. However, C's local search would have been unsuccessful and it would have invoked its query propagation algorithm, set up a control block as indicated in Figure 40, and then sent a query to the DSU A. Figure 41 through Figure 46 trace the chain of events that follow, with the desired information being located in DSU D.

Example 2.

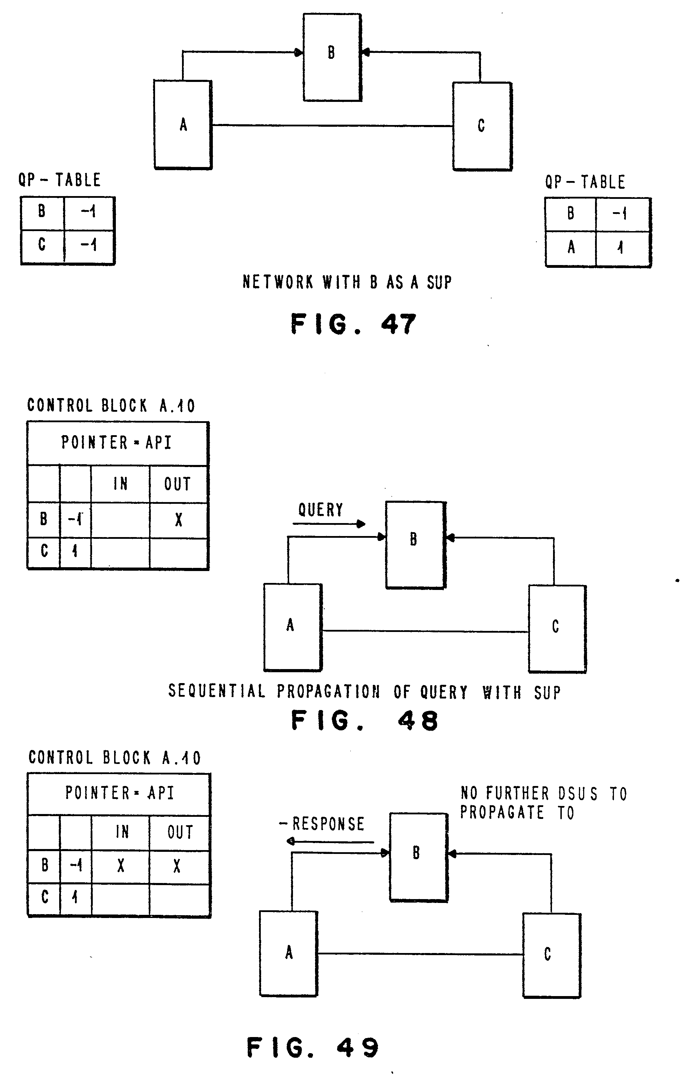

Consider an example where a SUP relationship is involved. In Figure 47, assume that A is the initiator of the query, the required information is in C. Figure 48 through Figure 51 trace this operation.

Parallel Propagation

Parallel propagation is a message driven distributed version of breadth first search. The control block that is set up is identical to that which is set up in sequential propagation. However, instead of sending the query to a single DSU at a time, queries are sent to many DSUs simultaneously. Thus, there may be several copies of the same query message in the network at any one time. In addition, in order to guarantee correct termination of the algorithm, it is not permitted to delete the control block and cease further propagation of the message when the search is successful. Once started, the algorithm must run to completion by searching every possible DSU. The parallel algorithm, because of its parallelism, is considerably faster in response time than the sequential algorithm. However, it does take up more bandwidth than the sequential algorithm on average, though in the worst case both algorithms use equal bandwidth.

A small modification is needed for the case where both PEERs and SUPs exist in the network. In such an environment, it is desirable to query the SUPs before querying the PEERs. Thus, the DSU that initiates the query and any intermediary DSUs that receive the query from a SUB perform the query in two phases.

It divides the QP-table into two parts, one part containing all DSUs with negative priorities (the SUPs) and one part containing all the DSUs with positive priorities (the PEERs). It first initiates a query to the SUPs by using the above algorithm and assuming that the SUP portion of the QP-table comprises the entire QP-table. When this query completes, it query the PEERs by using the above algorithm and assuming that the PEER portion of the QP-table comprise the entire QP-table.

Example:

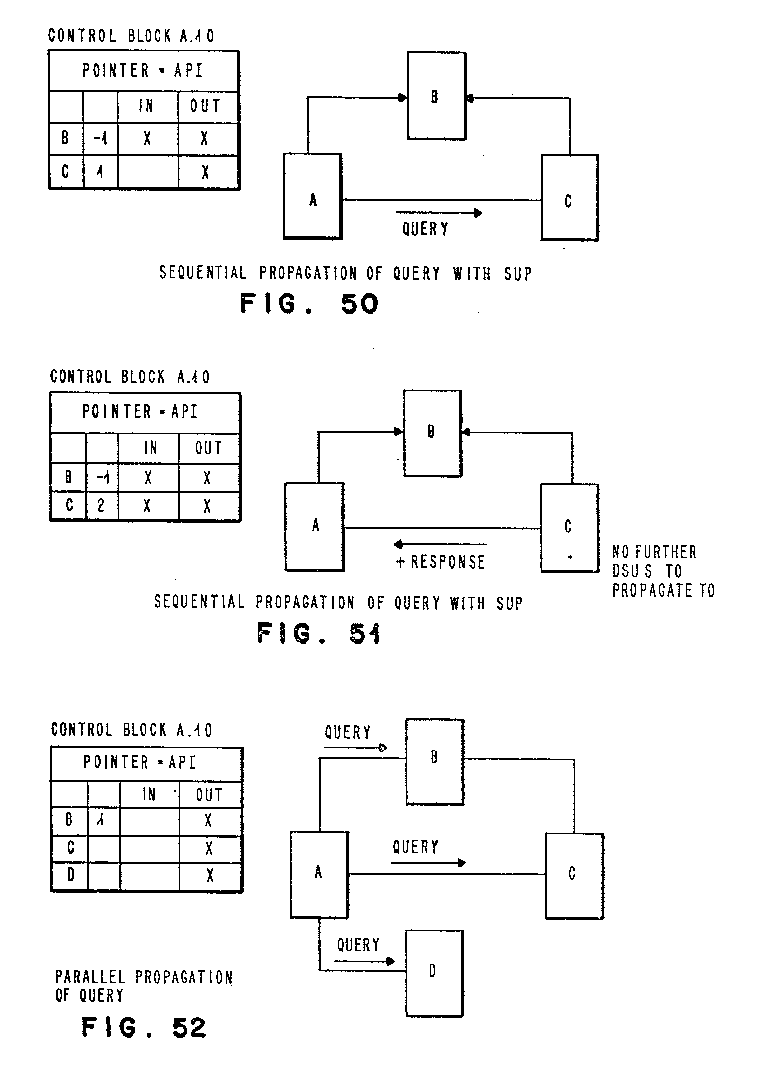

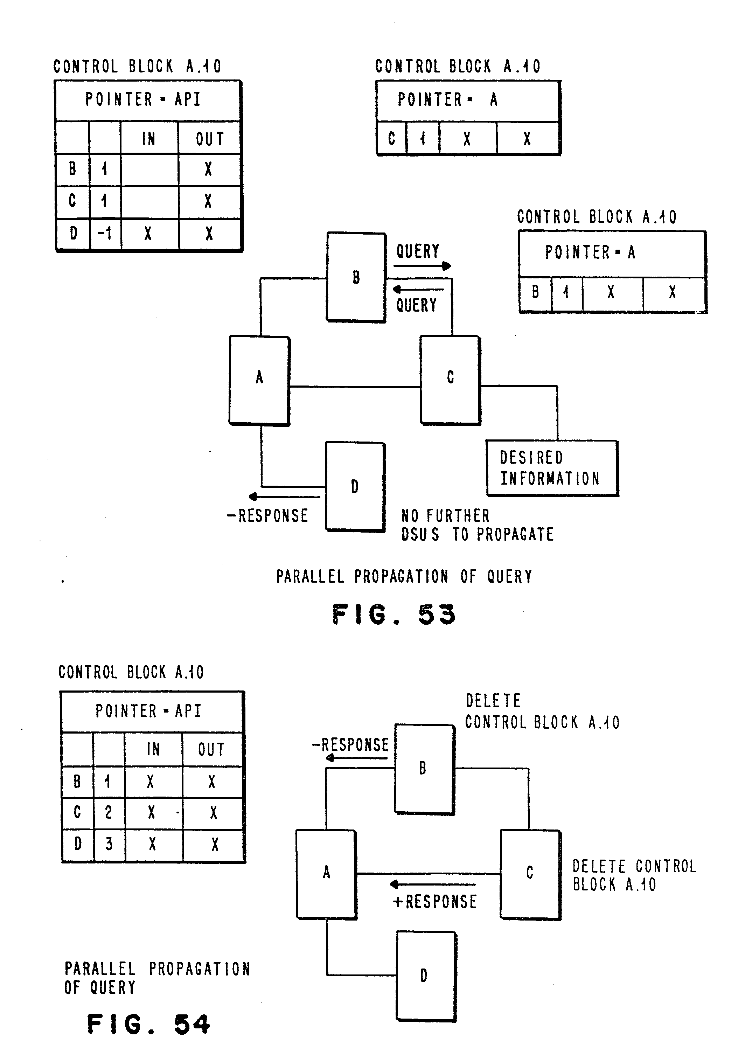

Consider the network shown earlier in Figure 34 where DSU A initiates the query and DSU C is the unit which has the required information. Figure 52 through Figure 55 show the evolution of the parallel propagation mechanism. It will be noted that it requires exactly two messages to be sent over every communication path.

SPANNING TREE PROPAGATION

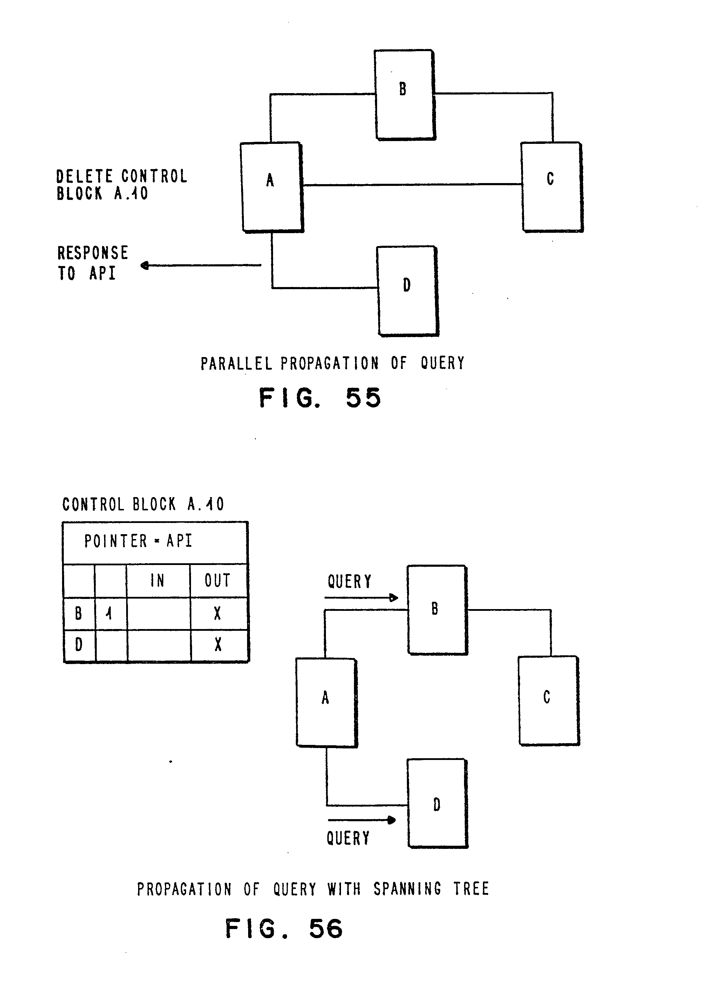

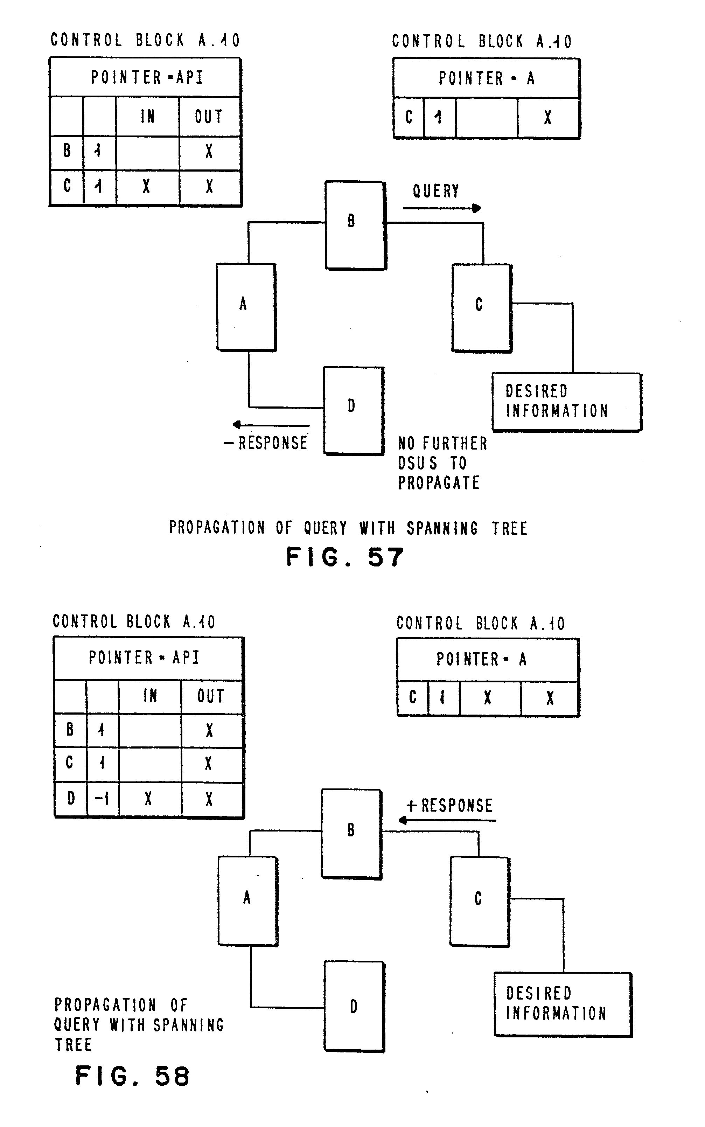

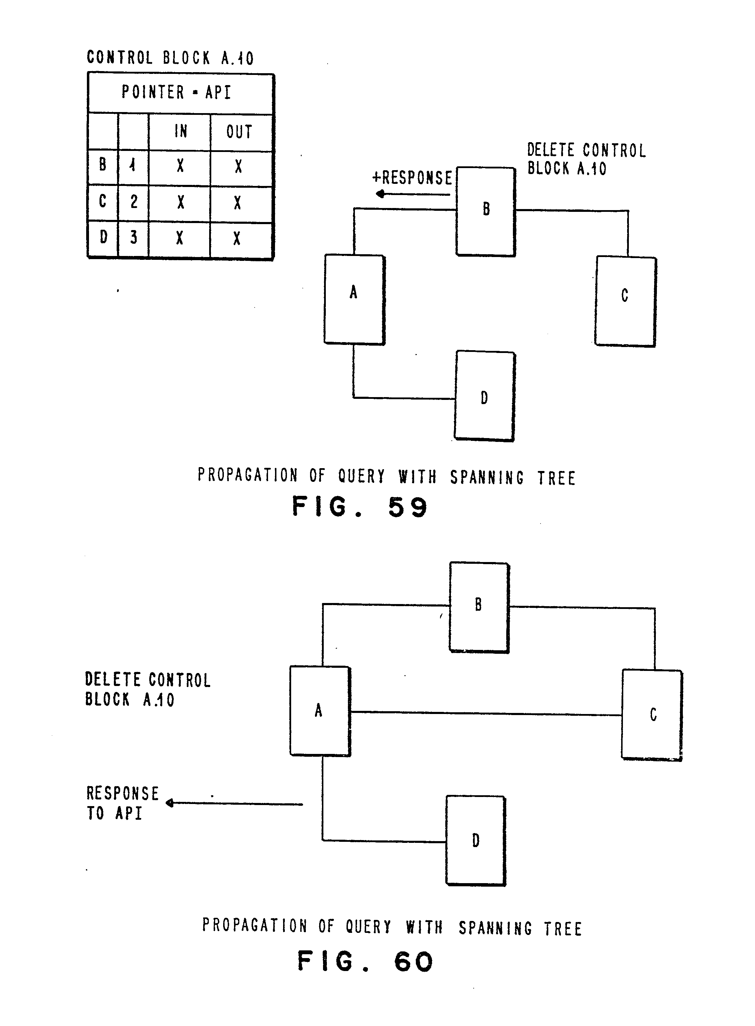

The above examples of sequential and parallel propagation depict the queries traversing a general mesh connected network. There is some inefficiency in such propagation, as the same DSU may receive the same query messages from more than one neighbor, resulting in an unproductive use of communication bandwidth. A means of making the propagation mechanism more bandwidth efficient is to ensure that the network described by the relationships between DSUs forms a spanning tree. In a spanning tree, a DSU will receive only a single copy of each query message, thereby reducing bandwidth use as well as processing overhead. Figure 56 through Figure 60 depict such a configuration, showing the propagation of query messages in the parallel propagation mode.

The disadvantage of this approach is that it is not resistant to failures of links. If a communication path that is used in the tree were to fail, the network would become disconnected and full accessibility would not be possible. Mesh connected networks can preserve full accessibility despite some failures.

SUMMARY

The algorithms described above prove that sequential and parallel propagation of queries can be implemented in most network topologies for directory services. The choice of sequential versus parallel propagation depends upon the product/installation preference and the requirement for bandwidth/response time. Spanning tree propagation may be useful in certain environments, but the networks would become fully disconnected if there were link failures.

**Claims**

1. In a database directory system for processing user queries, said database directory including a plurality of directory service units (DSU) which provide one or more directory service functions, structure including:

a directory operation control block for controlling directory system functions for said user queries, said directory operation control block containing an affinity list, a query algorithm control field, an integrity parameters field and an access control field; and

a query control block containing information indicating the origin of a query received by said DSU.

2. Structure in accordance with Claim 1 in which said affinity list describes the logical relationship between the DSU in which said directory operation control block is located and other members of a particular directory data base.

3. Structure in accordance with Claim 2 in which said affinity list describes whether said other members of a particular directory data base are in a superior, a subordinate, or a peer relationship to said DSU in which said affinity list is located.

4. Structure in accordance with Claim 1 in which said query algorithm control field defines actions to be taken within said DSU to resolve responses to search queries to said DSU.

5. Structure in accordance with Claim 1 in which said access control field describes the types of access to be permitted to said DSU.

6. Structure in accordance with Claim 1 in which said integrity parameters field describe the degree of error tolerance to be permitted in data transactions with said DSU.

7. Structure in accordance with Claim 1 in which said query control block contains information as to whether said user query is to be in a serial or a parallel mode.

8. Structure in accordance with Claim 7 in which said query control block also includes correlation information uniquely identifying each of said queries.

9. Structure in accordance with Claim 8 in which said query control block also includes a listing of the other of said DSUs to which said query may be sent.

10. Structure in accordance with Claim 9 in which said query control block also contains information as to the relative priorities of said other of said DSUs in receiving said query.

11. Structure in accordance with Claim 10 in which said query control block also contains information as to the propagation of said query by said DSU and the receipt of a response by said DSU to said query by one of said other of said DSUs.

12. Structure in accordance with Claim 7 in which said query control block in each DSU includes means for adapting the information as to serial or parallel propagation mode in dependence on the propagation mode indicated in a received query.

0 211 162

PROCESSES USING THE DIRECTORY SERVICE SYSTEM

# FIG. 1

STRUCTURE OF NETWORK SERVICE PROCESS, P(N)

# FIG. 8

INTERCONNECTED DSUS IN A DSS

FIG. 2

FUNCTIONS DISTRIBUTED IN A DSS

FIG. 3

TWO-LEVEL HYBRID DIRECTORY SYSTEM

FIG. 4

STRUCTURE OF END USER SERVICE, P(U)

# FIG. 5

STRUCTURE OF DIRECTORY DATA SERVICE   P(D)

# FIG. 7

STRUCTURE OF DIRECTORY FUNCTION SERVICE, P(F)

# FIG. 6

USER

* * *: REMOTE COMMUNICATION PATH
————: LOCAL LINKAGE

USER

(DSS)

USER

DIRECTORY SERVICE PROCESSES DISTRIBUTED IN A DSS

FIG. 9

DSI REQUEST FLOWS

FIG. 10

DSI REPLY (DATA) FLOWS

FIG. 11

STRUCTURE

FIG. 42

APPLICATION PROGRAM
(USER)

DIRECTORY
PROTOCOL
BOUNDARY

P(U)

API_UPDATE_SEND
PROCESSOR

API_UPDATE_RECEIVE
PROCESSOR

UPDATE
ALGORITHM

OP CONTROL
BLOCK

P(F)

DIRECTORY
DATA ACCESS
PROTOCOL
BOUNDARY

DSI_UPDATE_RQ
PROCESSOR

DSI_UPDATE_REPLY
PROCESSOR

DIRECTORY
DESCRIPTOR

P(D)

DATA_WRITE
PROCESSOR

* *
* *
* * * *
* *
* *
* *

DATA_SEND
PROCESSOR

DATA_RECEIVE
PROCESSOR

P(N)

NETWORK
PROTOCOL
BOUNDARY

DIRECTORY SYSTEM MODEL: UPDATE PROCESSING SEQUENCE

F I G.  13

DIRECTORY SYSTEM MODEL: QUERY PROCESSING SEQUENCE

FIG. 14

| | | |
|---|---|---|
| AFFINITY LIST | | |
| SEARCH ALGORITHM CONTROL | | |
| INTEGRITY PARMS | | |
| ACCESS CONTROL | | |

DIRECTORY OPERATION CONTROL BLOCK

# FIG. 15

QP - TABLE

| DSU ID | PRIORITY | ALGORITHM CONTROL |
|--------|----------|-------------------|
| X | 1 | — |
| . | . | . |
| . | . | . |
| . | . | . |

UP-TABLE

| DSU ID | PRIORITY | ALGORITHM CONTROL |
|--------|----------|-------------------|
| Y | 1 | — |
| . | . | . |
| . | . | . |
| . | . | . |

P-TABLE STRUCTURE

# FIG. 16

• <u>SUP-SUB RELATIONSHIP</u>

```
┌──────────┐                    ┌──────────┐
│  DSU(A)  │───────────────────▶│  DSU(B)  │
└──────────┘                    └──────────┘
```

SUP-SUB RELATIONSHIP

# FIG. 17

```
┌──────────┐                    ┌──────────┐
│    A     │────────────────────│    B     │
└──────────┘                    └──────────┘
```

• <u>PEER-PEER RELATIONSHIP</u>

QP-TABLE

| A | . . . |
|---|-------|

UP-TABLE

| B | . . . |
|---|-------|

```
┌──────────┐            ┌──────────┐
│  DSU(A)  │────────────│  DSU(B)  │
└──────────┘            └──────────┘
```

PEER RELATIONSHIP

P-TABLE TRANSLATION

# FIG. 19

# FIG. 18

```
┌──────────┐                    ┌──────────┐
│    A     │────────────────────│    B     │
└──────────┘                    └──────────┘
```

QP-TABLE                         QP-TABLE

| B | . . . |
|---|-------|

| A | . . . |
|---|-------|

P-TABLE TRANSLATION

# FIG. 20

DSU(A) ←——————————→ DSU(B)

REPLICATED RELATIONSHIP

# FIG. 21

A ←——————————→ B

UP-TABLE

| B | . . . |

UP-TABLE

| A | . . . |

P-TABLE

# FIG. 22

SUP = A
DSU(B)

SUP = A                                    SUP = A
DSU(C)————————→ DSU(A) ←————— DSU(D)

SUB = B,C,D

RELATIONSHIPS IN CENTRALIZED DIRECTORY SYSTEM

# FIG. 23

PEER = C,B
DSU(A)

PEER A,C   DSU(B)————————————DSU(C) PEER = A,B

RELATIONSHIPS IN DISTRIBUTED DIRECTORY

# FIG. 24

SUP=C,B

DSU(A)

SUP=A,C DSU(B) DSU(C) SUP=A,B

RELATIONSHIPS IN REPLICATED DIRECTORY SYSTEM

# FIG. 25

SUP = B

DSU(A) DSU(B) SUP=A

DSU(C) DSU(D) DSU(E) SUP=B DSU(F)

SUP=A SUP=A SUP=A
PEER=D PEER=C,E PEER=D

DSU(G) DSU(H) DSU(I)

SUP=F SUP=F SUP=F

RELATIONSHIPS IN HYBRID DIRECTORY SYSTEM

# FIG. 26

SUP = A,B,C,D

UP-TABLE

| | |
|---|---|
| A | 1 |
| B | 1 |
| C | 1 |
| D | 1 |

UP-TABLE

# FIG. 27

SUP = A,B,C
PEERS = D,E,F

QP-TABLE

| | |
|---|---|
| A | -1 |
| B | -1 |
| C | -1 |
| D | 1 |
| E | 1 |
| F | 1 |

QP-TABLE FOR PARALLEL PROPAGATION

# FIG. 28

SUP = A,B,C
PEERS = D,E,F

↓

QP-TABLE

| | |
|---|---|
| A | − 3 |
| B | − 2 |
| C | − 1 |
| D | 1 |
| E | 2 |
| F | 3 |

QP-TABLE FOR SEQUENTIAL PROPAGATION

# FIG. 29

| SOURCE | CORRELATION NUMBER | INPUT SEARCH ARGUMENT | INFORMATION REQUESTED | SEQUENTIAL/ PARALLEL | . . . |
|---|---|---|---|---|---|

TYPICAL QUERY MESSAGE

# FIG. 30

| SOURCE OF QUERY | CORRELATION NO. OF QUERY | INFORMATION | . . . . . |
|---|---|---|---|

TYPICAL RESPONSE TO QUERY

# FIG. 31

QUERY
(SOURCE=X,
CORR NO = 10,...)

DSU A —— DSU B

QP-TABLE        CONTROL BLOCK

| C | 1 |
| D | 1 |

LABEL = X.10
PRINTER = A

| DSU | PRIORITY | IN | OUT |
|-----|----------|----|----|
| C | 1 | | |
| D | 1 | | |

CONSTRUCTION OF CONTROL BLOCK

# FIG. 32

QUERY
(SOURCE = X,
CORR NO. = 19,...)

DSU A —— DSU B

QP-TABLE        CONTROL BLOCK

| D | −1 |
| A | 1 |
| C | 2 |

LABEL = X.10
PRINTER = A

| DSU | PRIORITY | IN | OUT |
|-----|----------|----|----|
| C | 2 | | |

CONSTRUCTION OF CONTROL BLOCK

# FIG. 33

QP - TABLE

| A | 1 |
| C | 2 |

QP-TABLE

| B | 1 |
| A | 2 |

B

A

C

INFORMATION

QP-TABLE

| B | 1 |
| C | 2 |
| D | 3 |

D

QP-TABLE

| A | 1 |

EXAMPLE NETWORK

# FIG. 34

CONTROL BLOCK A.10

| POINTER = API | | | |
|---|---|---|---|
| | | IN | OUT |
| B | 1 | | X |
| C | 2 | . | |
| D | 3 | | |

QUERY →

B

A

C

D

SEQUENTIAL PROPAGATION
OF QUERY

# FIG. 35

CONTROL BLOCK A.10

| POINTER – API | | | |
|---|---|---|---|
| | | IN | OUT |
| B | 1 | | X |
| C | 2 | | |
| D | 3 | | |

CONTROL BLOCK A.10

| POINTER – A | | | |
|---|---|---|---|
| C | 2 | | X |

QUERY →

SEQUENTIAL PROPAGATION OF QUERY

# FIG. 36

CONTROL BLOCK A.10

| POINTER – API | | | |
|---|---|---|---|
| | | IN | OUT |
| B | 1 | | X |
| C | 2 | | |
| D | 3 | | |

CONTROL BLOCK A.10

| POINTER – A | | | |
|---|---|---|---|
| C | 2 | X | X |

+ RESPONSE ←

SEQUENTIAL PROPAGATION OF QUERY

# FIG. 37

CONTROL BLOCK A.10

| POINTER - API | | | |
|---|---|---|---|
| | | IN | OUT |
| B | 1 | X | X |
| C | 2 | | |
| D | 3 | | |

DELETED CONTROL
BLOCK A.10

+RESPONSE

SEQUENTIAL PROPAGATION OF QUERY

# FIG. 38

DELETE CONTROL
BLOCK A.10

RESPONSE
TO API

SEQUENTIAL PROPAGATION OF QUERY

# FIG. 39

CONTROL BLOCK A.10

| POINTER = API | | | |
|---|---|---|---|
| | | IN | OUT |
| B | 1 | | X |
| C | 2 | X | |
| D | 3 | | |

CONTROL BLOCK A.10

| POINTER = A | | | |
|---|---|---|---|
| C | 2 | | X |

CONTROL BLOCK A.10

| POINTER = B | | | |
|---|---|---|---|
| A | 2 | | X |

SEQUENTIAL PROPAGATION OF QUERY

# FIG. 40

CONTROL BLOCK A.10

| POINTER = API | | | |
|---|---|---|---|
| | | IN | OUT |
| B | 1 | | X |
| C | 2 | X | X |
| D | 3 | | |

CONTROL BLOCK A.10

| POINTER = A | | | |
|---|---|---|---|
| C | 2 | | X |

CONTROL BLOCK A.10

| POINTER = B | | | |
|---|---|---|---|
| A | 2 | X | X |

SEQUENTIAL
PROPAGATION OF QUERY

# FIG. 41

CONTROL BLOCK A.10

| POINTER = API | | | |
|---|---|---|---|
| | | IN | OUT |
| B | 1 | | X |
| C | 2 | | |
| D | 3 | | |

CONTROL BLOCK A.10

| POINTER = A | | | |
|---|---|---|---|
| C | 2 | | X |

—RESPONSE

B

A

C

DELETED CONTROL BLOCK A.10

D

SEQUENTIAL PROPAGATION OF QUERY

# FIG. 42

CONTROL BLOCK A.10

| POINTER = API | | | |
|---|---|---|---|
| | | IN | OUT |
| B | 1 | X | X |
| C | 2 | X | X |
| D | 3 | | |

DELETED CONTROL BLOCK A.10

—RESPONSE

B

A

C

D

SEQUENTIAL PROPAGATION OF QUERY

# FIG. 43

CONTROL BLOCK A.10

| POINTER = API | | | |
|---|---|---|---|
| | | IN | OUT |
| B | 1 | X | X |
| C | 2 | X | X |
| D | 3 | | X |

B

A          C

D

QUERY

DESIRED
INFORMATION

SEQUENTIAL PROPAGATION OF QUERY

FIG. 44

CONTROL BLOCK A.10

| POINTER - API | | | |
|---|---|---|---|
| | | IN | OUT |
| B | 1 | X | X |
| C | 2 | X | X |
| D | 3 | X | X |

+ RESPONSE

SEQUENTIAL PROPAGATION OF QUERY

# FIG. 45

DELETE CONTROL
BLOCK A.10

RESPONSE
TO API

SEQUENTIAL PROPAGATION OF QUERY

# FIG. 46

**FIG. 47**

QP – TABLE

| B | –1 |
|---|----|
| C | –1 |

QP – TABLE

| B | –1 |
|---|----|
| A | 1 |

NETWORK WITH B AS A SUP

**FIG. 47**

CONTROL BLOCK A.10

| POINTER = API | | | |
|---|---|----|-----|
| | | IN | OUT |
| B | –1 | | X |
| C | 1 | | |

QUERY

SEQUENTIAL PROPAGATION OF QUERY WITH SUP

**FIG. 48**

CONTROL BLOCK A.10

| POINTER = API | | | |
|---|---|----|-----|
| | | IN | OUT |
| B | –1 | X | X |
| C | 1 | | |

NO FURTHER DSUS TO PROPAGATE TO

– RESPONSE

**FIG. 49**

CONTROL BLOCK A.10

| POINTER - API | | | |
|---|---|---|---|
| | | IN | OUT |
| B | -1 | X | X |
| C | 1 | | X |

SEQUENTIAL PROPAGATION OF QUERY WITH SUP

# FIG. 50

CONTROL BLOCK A.10

| POINTER - API | | | |
|---|---|---|---|
| | | IN | OUT |
| B | -1 | X | X |
| C | 2 | X | X |

NO FURTHER
DSUS TO
PROPAGATE TO

SEQUENTIAL PROPAGATION OF QUERY WITH SUP

# FIG. 51

CONTROL BLOCK A.10

| POINTER - API | | | |
|---|---|---|---|
| | | IN | OUT |
| B | 1 | | X |
| C | | | X |
| D | | | X |

PARALLEL PROPAGATION
OF QUERY

# FIG. 52

CONTROL BLOCK A.10

| POINTER = API | | | |
|---|---|---|---|
| | | IN | OUT |
| B | 1 | | X |
| C | 1 | | X |
| D | -1 | X | X |

CONTROL BLOCK A.10

| POINTER = A | | | |
|---|---|---|---|
| C | 1 | X | X |

CONTROL BLOCK A.10

| POINTER = A | | | |
|---|---|---|---|
| B | 1 | X | X |

QUERY

QUERY

DESIRED
INFORMATION

−RESPONSE

NO FURTHER
DSUS TO PROPAGATE

PARALLEL PROPAGATION OF QUERY

## FIG. 53

CONTROL BLOCK A.10

| POINTER = API | | | |
|---|---|---|---|
| | | IN | OUT |
| B | 1 | X | X |
| C | 2 | X | X |
| D | 3 | X | X |

DELETE
CONTROL BLOCK A.10

−RESPONSE

DELETE CONTROL
BLOCK A.10

+RESPONSE

PARALLEL PROPAGATION
OF QUERY

## FIG. 54

DELETE CONTROL
BLOCK A.10

RESPONSE
TO API

PARALLEL PROPAGATION OF QUERY

## FIG. 55

CONTROL BLOCK A.10

| POINTER = API | | | |
|---|---|---|---|
| | | IN | OUT |
| B | 1 | | X |
| D | | | X |

QUERY

QUERY

PROPAGATION OF QUERY WITH SPANNING TREE

## FIG. 56

CONTROL BLOCK A.10

| POINTER -API | | | |
|---|---|---|---|
| | | IN | OUT |
| B | 1 | | X |
| C | 1 | X | X |

CONTROL BLOCK A.10

| POINTER - A | | | |
|---|---|---|---|
| C | 1 | | X |

QUERY →

B

A

C

D

DESIRED INFORMATION

← RESPONSE

NO FURTHER DSUS TO PROPAGATE

PROPAGATION OF QUERY WITH SPANNING TREE

## FIG. 57

CONTROL BLOCK A.10

| POINTER = API | | | |
|---|---|---|---|
| | | IN | OUT |
| B | 1 | | X |
| C | 1 | | X |
| D | -1 | X | X |

CONTROL BLOCK A.10

| POINTER = A | | | |
|---|---|---|---|
| C | 1 | X | X |

+ RESPONSE ←

B

A

C

D

DESIRED INFORMATION

PROPAGATION OF QUERY WITH SPANNING TREE

## FIG. 58

CONTROL BLOCK A.10

| POINTER - API | | | |
|---|---|---|---|
| | | IN | OUT |
| B | 1 | X | X |
| C | 2 | X | X |
| D | 3 | X | X |

DELETE CONTROL
BLOCK A.10

+RESPONSE

PROPAGATION OF QUERY WITH SPANNING TREE

# FIG. 59

DELETE CONTROL
BLOCK A.10

RESPONSE
TO API

PROPAGATION OF QUERY WITH SPANNING TREE

# FIG. 60